(19) Europäisches Patentamt / European Patent Office / Office européen des brevets

(11) **EP 4 708 156 A1**

(12) **EUROPEAN PATENT APPLICATION**

(43) Date of publication:
**11.03.2026  Bulletin 2026/11**

(21) Application number: **25199563.5**

(22) Date of filing: **02.09.2025**

(51) International Patent Classification (IPC):
**G06N 10/20** (2022.01)

(52) Cooperative Patent Classification (CPC):
**G06N 10/20**

(84) Designated Contracting States:
**AL AT BE BG CH CY CZ DE DK EE ES FI FR GB GR HR HU IE IS IT LI LT LU MC ME MK MT NL NO PL PT RO RS SE SI SK SM TR**
Designated Extension States:
**BA**
Designated Validation States:
**GE KH LA MA MD TN**

(30) Priority: **05.09.2024  JP 2024153534**

(71) Applicant: **FUJITSU LIMITED**
**Kawasaki-shi, Kanagawa 211-8588 (JP)**

(72) Inventor: **KURITA, Tomochika**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **COMPUTER PROGRAM, QUANTUM COMPUTATION SUPPORT METHOD, AND INFORMATION PROCESSING APPARATUS**

(57)  An information processing apparatus calculates, for each of a plurality of simultaneously measurable observables included in an observable group, an index value based on the number of characters other than I included in a Pauli string representing the observable. The information processing apparatus selects a predetermined number of observables from the observable group, based on the index values. The information processing apparatus then creates a basis transformation circuit that transforms an expectation value of each of the predetermined number of selected observables, included in an execution result of a quantum circuit that performs quantum computation based on a problem to be solved, into a measurement result of a single qubit.

FIG. 1

EP 4 708 156 A1

**Description**

FIELD

The embodiments discussed herein relate to a computer program, a quantum computation support method, and an information processing apparatus.

BACKGROUND

A quantum computer is able to measure expectation values of target physical quantities (observables) using qubits. Each observable is represented by a sequence of Pauli operators (X, Y, Z, I). The sequence of Pauli operators is called a Pauli string. Each Pauli operator in the Pauli string corresponds to a qubit whose state is to be measured. The Pauli string represents the tensor product of the Pauli operators included in the Pauli string. For example, an observable "ZZI" corresponds to "$Z \otimes Z \otimes I$" ($\otimes$ denotes a tensor product). Hereinafter, the tensor product of Pauli operators may be simply referred to as a product.

A quantum circuit that is executed by a quantum computer includes a quantum circuit that performs quantum computation corresponding to a problem to be solved and a basis transformation circuit that performs a basis transformation for outputting measurement target observables. A plurality of observables that satisfy a certain condition are simultaneously measurable using the same basis transformation circuit. In order to enable the simultaneous measurement of the plurality of observables, the observables need to be able to commute with each other.

There are two levels of "commutativity" for observables: qubit-wise commutativity (QWC) and general commutativity (GC). In QWC, a plurality of observables commute with each other if the Pauli characters, which may refer to Pauli operators, corresponding to the plurality of observables qubit-wise commute with each other. If observables commute with each other under QWC, then the observables also commute with each other under QC. In GC, even if the Pauli characters corresponding to a plurality of observables do not qubit-wise commutate with each other, the overall Pauli strings still commute with each other if they satisfy predetermined conditions.

A process of dividing a plurality of observables to be measured into simultaneously measurable observable groups (partitions) is called partitioning. By performing appropriate partitioning, it becomes possible to efficiently perform the simultaneous measurement of expectation values.

As a technique related to the partitioning of observables, for example, a partitioning method for reducing the number of partitions in which simultaneously measurable observables are collected has been proposed. As a method of creating a quantum circuit from a unitary coupled cluster Ansatz, a method for reducing the circuit depth and the number of entangling gates in the quantum circuit has also been proposed. Further, systems have been proposed that facilitate partitioned template matching and/or symbolic peephole optimization. See, for example, the following literatures.

International Publication Pamphlet No. WO 2022/269712
Japanese National Publication of International Patent Application No. 2023-521223
Japanese National Publication of International Patent Application No. 2023-547348
When partitioning is performed under QWC, basis transformation is achieved using single-qubit operations. This, however, increases the number of partitions. As the number of partitions increases, the number of executions of a quantum circuit for obtaining the values of all observables increases, and the computational efficiency for solving the problem deteriorates.

In the partitioning under GC, the number of partitions generated is significantly smaller than in QWC. Therefore, GC enables more efficient computation than QWC. However, in GC, a basis transformation circuit includes many two-qubit gates. The gate operations of two-qubit gates have higher noise levels and cause errors.

SUMMARY

In one aspect, it is desirable to reduce the number of two-qubit gates in a basis transformation circuit.

In one aspect, there is provided a computer program that causes a computer to perform a process including: calculating, for each observable of a plurality of simultaneously measurable observables included in an observable group, an index value based on a number of characters other than I included in a Pauli string representing said each observable; selecting a predetermined number of observables from the observable group, based on the index value; and creating a basis transformation circuit that transforms an expectation value of each of the predetermined number of selected observables into a measurement result of a single qubit, the expectation value being included in an execution result of a quantum circuit, the quantum circuit being configured to perform quantum computation based on a problem to be solved.

BRIEF DESCRIPTION OF DRAWINGS

The invention is described, by way of example only, with reference to the following drawings, in which:

FIG. 1 illustrates an example of a quantum computation support method according to a first embodiment;
FIG. 2 illustrates an example of a system configuration according to a second embodiment;
FIG. 3 illustrates an example of hardware of a classical computer;
FIG. 4 illustrates an example of determining commutation relationship;
FIG. 5 illustrates an example of partitioning;
FIG. 6 illustrates an example of a basis transformation operation;
FIG. 7 illustrates a first example of a basis transformation circuit corresponding to a basis transformation operation;
FIG. 8 illustrates a second example of a basis transformation circuit corresponding to a basis transformation operation;
FIG. 9 illustrates examples of basis transformation operations;
FIG. 10 illustrates a first example of the transformation of Pauli strings representing observables using a basis transformation circuit;
FIG. 11 illustrates a second example of the transformation of Pauli strings representing observables using a basis transformation circuit;
FIG. 12 illustrates an example of a method of selecting observables to be included in a generator "G";
FIG. 13 illustrates an example of a process of generating a generator "G";
FIG. 14 illustrates an example of a method of creating a basis transformation circuit;
FIG. 15 illustrates an example (1/5) of a basis transformation operation;
FIG. 16 illustrates an example (2/5) of the basis transformation operation;
FIG. 17 illustrates an example (3/5) of the basis transformation operation;
FIG. 18 illustrates an example (4/5) of the basis transformation operation;
FIG. 19 illustrates an example (5/5) of the basis transformation operation;
FIG. 20 illustrates an example of functions of the classical computer for executing quantum computation;
FIG. 21 is a flowchart illustrating an example procedure for quantum computation;
FIG. 22 is a flowchart illustrating an example procedure for a quantum circuit creation process;
FIG. 23 is a flowchart illustrating an example procedure for a generator generation process;
FIG. 24 illustrates an example of adding elements to a set "Q";
FIG. 25 is a flowchart (1/2) illustrating an example procedure for an element addition process for Q;
FIG. 26 is a flowchart (2/2) illustrating the example procedure for the element addition process for Q;
FIG. 27 is a flowchart illustrating an example procedure for a basis transformation operation determination process;
FIG. 28 is a flowchart illustrating an example procedure for an H operation determination process;
FIG. 29 is a flowchart illustrating an example procedure for a CX operation determination process;
FIG. 30 is a flowchart illustrating an example procedure for an H transformation and CX transformation process;
FIG. 31 is a flowchart illustrating an example procedure for an H operation and CX operation process;
FIG. 32 is a flowchart illustrating an example procedure for an S operation determination process;
FIG. 33 is a flowchart illustrating an example procedure for a CZ operation determination process;
FIG. 34 is a diagram (1/5) illustrating an example of a basis transformation operation;
FIG. 35 is a diagram (2/5) illustrating the example of the basis transformation operation;
FIG. 36 is a diagram (3/5) illustrating the example of the basis transformation operation;
FIG. 37 is a diagram (4/5) illustrating the example of the basis transformation operation;
FIG. 38 is a diagram (5/5) illustrating the example of the basis transformation operation;
FIG. 39 illustrates an example of a generated basis transformation circuit;
FIG. 40 illustrates an example of determining a basis transformation operation in the H transformation and CX transformation process;
FIG. 41 illustrates an example of a partitioning result;
FIG. 42 illustrates an example of the number of two-qubit gates in generated basis transformation circuits;
FIG. 43 illustrates an example of generators for a partition with partition number "2";
FIG. 44 illustrates an example of generators for a partition with partition number "10"; and
FIG. 45 illustrates an example of the number of two-qubit gates depending on weights given to characters used for calculation of an index value.

DESCRIPTION OF EMBODIMENTS

Hereinafter, embodiments will be described with reference to the drawings. A plurality of embodiments may be combined unless they exclude each other.

[First Embodiment]

A first embodiment relates to a quantum computation support method that is able to create a basis transformation circuit for enabling simultaneous measurement of observables, with a small number of two-qubit gates.

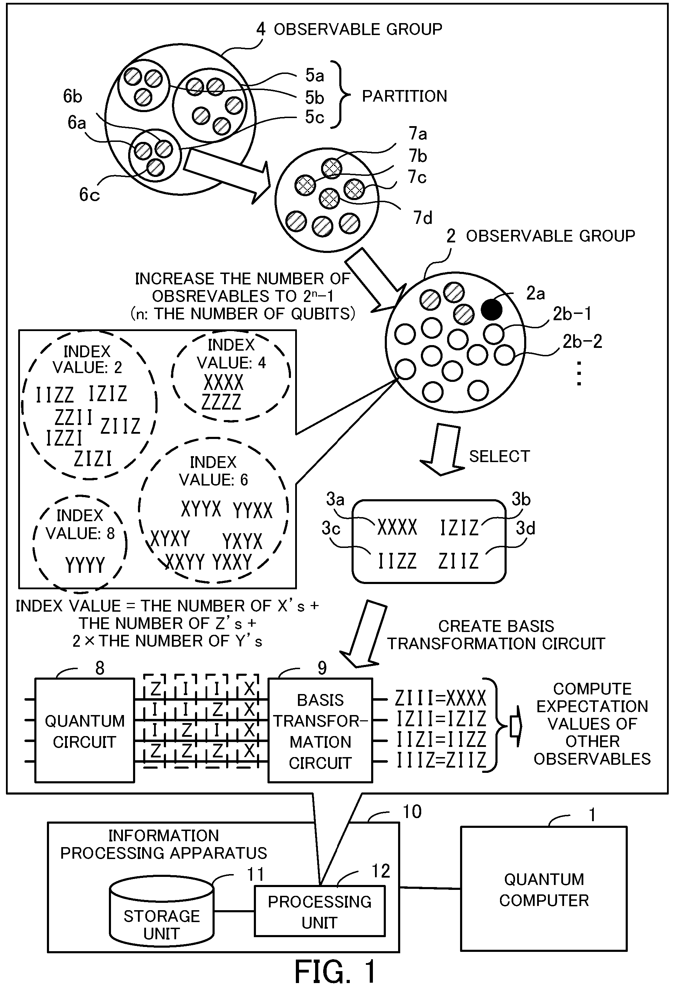

FIG. 1 illustrates an example of a quantum computation support method according to the first embodiment. FIG. 1 illustrates an information processing apparatus 10 that implements the quantum computation support method. The information processing apparatus 10 is able to implement the quantum computation support method by executing, for example, a quantum computation support program.

The information processing apparatus 10 includes a storage unit 11 and a processing unit 12. The storage unit 11 is, for example, a memory or a storage device included in the information processing apparatus 10. The processing unit 12 is, for example, a processor or an arithmetic circuit included in the information processing apparatus 10.

The information processing apparatus 10 is connected to a quantum computer 1 and causes the quantum computer 1 to execute quantum computation. For example, the information processing apparatus 10 acquires expectation values of observables obtained as a result of the quantum computation from the quantum computer 1. The information processing apparatus 10 computes a solution to a problem to be solved, based on the expectation values of a large number of observables.

For example, the processing unit 12 of the information processing apparatus 10 causes the quantum computer 1 to execute a quantum circuit 8 that represents a procedure of quantum computation based on a problem to be solved and a basis transformation circuit 9 for measuring observables obtained from the execution result of the quantum circuit 8. To this end, the processing unit 12 creates the basis transformation circuit 9 for enabling simultaneous measurement of a plurality of observables, with a small number of two-qubit gates.

Assume, for example, that there is an observable group 2 including a plurality of simultaneously measurable observables. The observable group 2 may include observables used in the computation of a solution to the problem to be solved and observables that are not needed for the computation of the solution. The processing unit 12 calculates, for each of the plurality of simultaneously measurable observables in the observable group 2, an index value on the basis of the number of characters other than "I" included in the Pauli string representing the observable. For example, the processing unit 12 calculates an index value for each observable in the observable group 2 such that an observable with fewer characters other than "I" in the Pauli string representing the observable is given a higher selection priority.

The processing unit 12 selects, based on the index values, a predetermined number of observables 3a to 3d from the observables included in the observable group 2. For example, the processing unit 12 selects the predetermined number of observables 3a to 3d in descending order of selection priority based on the index values. The number of observables 3a to 3d to be selected is, for example, equal to the number of qubits operated in the quantum circuit 8.

Then, the processing unit 12 creates the basis transformation circuit 9. The basis transformation circuit 9 is a quantum circuit that transforms the expectation value of each of the predetermined number of selected observables 3a to 3d in the execution result of the quantum circuit 8, into a measurement result of a single qubit.

The above approach is to select the predetermined number of observables 3a to 3d on the basis of the number of characters other than "I" included in each Pauli string representing an observable. With this approach, for example, it is possible to select observables whose Pauli strings each have fewer characters other than "I". As a result, the number of two-qubit gates included in the basis transformation circuit 9 is reduced.

That is, after the gate operation of the basis transformation circuit 9, the expectation values of the predetermined number of selected observables 3a to 3d become equal to the expectation values of the observables each represented by a Pauli string including one "Z" and one or more "I"s.

At this time, the expectation values of the predetermined number of selected observables 3a to 3d are obtained from the measurement results of the respective qubits after the gate operation of the basis transformation circuit 9. In the example of FIG. 1, the Pauli string of the observable 3a is "XXXX", and the expectation value of the observable 3a is obtained as the expectation value (i.e., the measurement result of the first qubit) of "ZIII" after the execution of the basis transformation circuit 9. The Pauli string of the observable 3b is "IZIZ", and the expectation value of the observable 3b is obtained as the expectation value (i.e., the measurement result of the second qubit) of "IZII" after the execution of the basis transformation circuit 9. The Pauli string of the observable 3c is "IIZZ", and the expectation value of the observable 3c is obtained as the expectation value (i.e., the measurement result of the third qubit) of "IIZI" after the execution of the basis transformation circuit 9. The Pauli string of the observable 3d is "ZIIZ", and the expectation value of the observable 3d is obtained as the expectation value (i.e., the measurement result of the fourth qubit) of "IIIZ" after the execution of the basis transformation circuit 9.

The expectation values of the unselected observables among observables 6a to 6c used for computing a solution to the problem to be solved within the observable group 2 may be computed from the measurement results of the selected observables 3a to 3d. That is, if the expectation values of the selected observables 3a to 3d are measured, it becomes possible to obtain the expectation values of the observables 6a to 6c used for computing a solution to the problem to be solved.

The basis transformation circuit 9 transforms one of the characters in each Pauli string into "Z" and the others into "I", as in "ZIII". Two-qubit gates are used to transform characters other than "I" into "I". Therefore, as more "I"s are included in the selected observables 3a to 3d before the transformation, fewer two-qubit gates are needed in the basis transformation circuit 9.

An index value for an observable is calculated as, for example, the linear sum of the numbers of characters "X", "Y", and "Z" in the Pauli string representing the observable. In this case, a smaller index value corresponds to a higher selection priority. In the case of calculating the index value as such a linear sum, appropriate weighting coefficients are set for "X", "Y", and "Z" so as to enable optimization of the selection of the observables 3a to 3d.

For example, the processing unit 12 sets the weighting coefficient for the number of "Y"s in the linear sum to higher than the weighting coefficients for the number of "X"s and the number of "Z"s, and then calculates index values. In the case where the weighting coefficients for the number of "X"s and the number of "Z"s are set to "1" and the weighting coefficient for the number of "Y"s is set to "2", the index value is calculated as "index value = (the number of X's) + (the number of Z's) + 2 × (the number of Y's)". In this case, the index values for the Pauli strings "IIZZ, IZIZ, ..." are "2". The index values for the Pauli strings "XXXX, ZZZZ" are "4". The index values for the Pauli strings "XYYX, YYXX, ..." are "6". The index value for the Pauli string "YYYY" is "8".

By setting a higher weighting coefficient for "Y", "Y" is prevented from being included in the Pauli strings of the selected observables 3a to 3d. In order to transform "Y" into "I" using the basis transformation circuit 9, "Y" is first transformed into "X" or "Z" that is then transformed into "I". Therefore, the more "Y"s are included in the Pauli strings of the selected observables 3a to 3d, the more two-qubit gates are included in the basis transformation circuit 9. In other words, by suppressing the inclusion of "Y" in the Pauli strings of the selected observables 3a to 3d, the number of two-qubit gates in the basis transformation circuit 9 is reduced accordingly.

The observables in the observable group 2 are generated based on an observable group 4 including the observables used for computing a solution to the problem to be solved. For example, the processing unit 12 performs partitioning of the observable group 4 to generate a plurality of partitions 5a to 5c each including simultaneously measurable observables. In this case, the processing unit 12 creates the basis transformation circuit 9 for each of the plurality of partitions 5a to 5c.

For example, the partition 5c includes a plurality of simultaneously measurable observables 6a to 6c among the observables in the observable group 4. In this case, the processing unit 12 includes, for example, the observables 6a to 6c and observables 7a to 7d, which are represented by the products of the observables 6a to 6c, in the observable group 2. The observables 7a to 7d are simultaneously measurable together with the observables 6a to 6c that are used for computing a solution to the problem to be solved.

The inclusion of the observables 7a to 7d, which are not used for computing a solution to the problem to be solved, in the observable group 2 in this manner increases the likelihood that observables with fewer characters other than "I" are included in the observable group 2. By doing so, it is possible to reduce the number of characters other than "I" in the Pauli strings of the selected observables 3a to 3d, and thus to reduce the number of two-qubit gates included in the basis transformation circuit 9.

Let n (n is a natural number) denote the number of qubits to be operated by the quantum circuit 8. The number of simultaneously measurable observables, excluding the observable of a trivial Pauli string "II ..." (all are "I"), is "$2^n - 1$". Therefore, in the case where the number of observables in the observable group 2 is less than "$2^n - 1$", the processing unit 12 may add observables to the observable group 2 so that the total number of observables in the observable group 2 becomes "$2^n - 1$".

For example, even if the observables 7a to 7c are added to the observable group 2, the total number of observables including the observables 6a to 6c and the observables 7a to 7c may be less than "$2^n - 1$". In such a case, the processing unit 12 generates an additional observable 2a which commutes with each of the plurality of observables 6a to 6c and whose Pauli string includes two or less characters other than "I". Then, the processing unit 12 includes, in the observable group 2, the observables 6a to 6c, the newly generated observable 2a, and observables 2b-1, 2b-2, and ... (depicted as white circles in the drawing) each represented by the product of two or more of the observables 6a to 6c and the observable 2a. As a result, the observable group 2 including "$2^n - 1$" observables is obtained.

By doing so, it becomes possible to select appropriate observables 3a to 3d from the observable group 2 including observables that are all simultaneously measurable together with the observables 6a to 6c. As a result, the number of characters other than "I" included in the Pauli string of each selected observable 3a to 3d is minimized, and the number of two-qubit gates in the basis transformation circuit 9 is reduced.

[Second Embodiment]

Next, a second embodiment will be described. The second embodiment relates to a quantum computing system that efficiently measures the complete states of qubits.

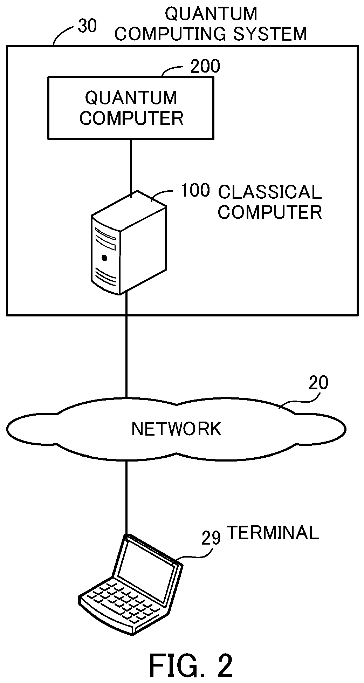

FIG. 2 illustrates an example of a system configuration according to the second embodiment. A quantum computing system 30 includes a classical computer 100 and a quantum computer 200. The classical computer 100 is a so-called von Neumann-type computer. The quantum computer 200 is a non-von Neumann-type computer to which the principles of quantum mechanics are applied. The classical computer 100 is connected to a terminal 29 via a network 20. The terminal 29 is a von Neumann-type computer that is used by a user.

The terminal 29 transmits a quantum computation request to the quantum computing system 30 in response to an input from the user. In the quantum computing system 30, the classical computer 100 and the quantum computer 200 cooperate with each other to execute quantum computation according to the received quantum computation request. Then, the quantum computing system 30 transmits the computation result to the terminal 29.

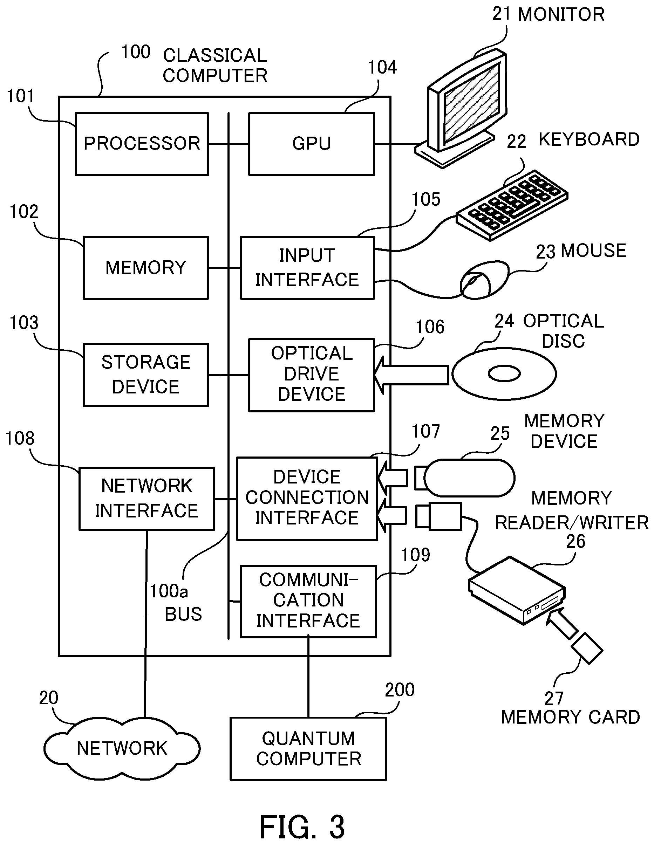

FIG. 3 illustrates an example of hardware of the classical computer. The entire classical computer 100 is controlled by a processor 101. A memory 102 and a plurality of peripheral devices are connected to the processor 101 via a bus 100a. The processor 101 may be a multiprocessor. A set of multiple processors may be referred to as the processor 101. The processor 101 may be referred to as processor circuitry. Each of the plurality of processors is able to perform some or all of the plurality of processes performed by the classical computer 100. Two or more processes among a plurality of related processes may be performed by different processors. The processor 101 is, for example, a central processing unit (CPU), a micro processing unit (MPU), or a digital signal processor (DSP). At least a part of the functions implemented by the processor 101 executing the program may be implemented by an electronic circuit such as an application specific integrated circuit (ASIC) or a programmable logic device (PLD).

The memory 102 is used as a main storage device of the classical computer 100. The memory 102 temporarily stores at least part of an operating system (OS) program and application programs to be executed by the processor 101. The memory 102 also stores various data used by the processor 101 during its operation. As the memory 102, for example, a volatile semiconductor storage device such as a random access memory (RAM) is used.

The peripheral devices coupled to the bus 100a include a storage device 103, a graphics processing unit (GPU) 104, an input interface 105, an optical drive device 106, a device connection interface 107, a network interface 108, and a communication interface 109.

The storage device 103 electrically or magnetically writes and reads data to and from a built-in storage medium. The storage device 103 is used as an auxiliary storage device of the classical computer 100. The storage device 103 stores OS programs, application programs, and various data. As the storage device 103, for example, a hard disk drive (HDD) or a solid state drive (SSD) may be used.

The GPU 104 is an arithmetic device that performs image processing, and is also called a graphic controller. A monitor 21 is connected to the GPU 104. The GPU 104 displays images on the screen of the monitor 21 in accordance with instructions from the processor 101. Examples of the monitor 21 include a display device using organic electro luminescence (EL) and a liquid crystal display device.

A keyboard 22 and a mouse 23 are connected to the input interface 105. The input interface 105 transmits signals sent from the keyboard 22 and the mouse 23 to the processor 101. The mouse 23 is an example of a pointing device, and other pointing devices may be used. Examples of other pointing devices include a touch panel, a tablet, a touch pad, and a track ball.

The optical drive device 106 reads data recorded on an optical disc 24 or writes data to the optical disc 24 using laser light or the like. The optical disc 24 is a portable recording medium on which data is recorded so as to be readable by reflection of light. The optical disc 24 may be a digital versatile disc (DVD), a DVD-RAM, a compact disc read only memory (CD-ROM), a CD-recordable (CD-R)/CD-rewritable (CD-RW), or the like.

The device connection interface 107 is an interface for connecting peripheral devices to the classical computer 100. For example, a memory device 25 and a memory reader/writer 26 may be connected to the device connection interface 107. The memory device 25 is a recording medium having a function of communicating with the device connection interface 107. The memory reader/writer 26 is a device that writes data to a memory card 27 or reads data from the memory card 27. The memory card 27 is a card-type recording medium.

The network interface 108 is connected to the network 20. The network interface 108 is connected to other computers (including terminals) (not illustrated) via the network 20.

The communication interface 109 is connected to the quantum computer 200. The communication interface 109 communicates with the quantum computer 200. For example, the communication interface 109 instructs the quantum computer 200 to execute a quantum circuit. The communication interface 109 acquires the measurement results of expectation values from the quantum computer 200.

The classical computer 100 is able to implement the processing functions of the second embodiment with the hardware as described above. The information processing apparatus 10 described in the first embodiment is also implemented with hardware similar to that of the classical computer 100 illustrated in FIG. 3.

The classical computer 100 implements the processing functions of the second embodiment by executing a program recorded on a computer-readable recording medium, for example. The program describing the processing content to be performed by the classical computer 100 may be recorded on various recording media. For example, a program to be executed by the classical computer 100 may be stored in the storage device 103. The processor 101 loads at least a part of the program from the storage device 103 into the memory 102 and executes the program. The program to be executed by the classical computer 100 may be recorded on a portable recording medium such as the optical disc 24, the memory device 25, or the memory card 27. The program stored on the portable recording medium becomes executable after being installed in the storage device 103 under the control of the processor 101, for example. Alternatively, the processor 101 may read the program directly from the portable storage medium and execute the program.

A user who uses the quantum computing system 30 uses the terminal 29 to create, for example, a quantum circuit for solving a problem using quantum computation. When the user instructs the terminal 29 to execute the quantum computation, an execution request including the created quantum circuit for the quantum computation is transmitted from the terminal 29 to the quantum computing system 30. The execution request for the quantum computation specifies, for example, observables to be measured.

In the quantum computing system 30, the classical computer 100 causes the quantum computer 200 to execute the quantum computation based on the quantum circuit in response to the quantum computation execution request. At this time, the classical computer 100 decomposes the quantum circuit to be executed, into a quantum circuit using executable quantum gates according to the hardware specifications of the quantum computer 200 (such as native gates according to a qubit device) .

The classical computer 100 computes a solution to the problem to be solved, based on the results of measuring the predetermined observables on the state obtained after the execution of the obtained quantum circuit. Here, the quantum computer 200 measures the qubit state in the Z basis (computational basis) (i.e., a measurement in the Z basis). Therefore, in the case of using measurement results in the X basis (Hadamard basis) or the Y basis (circular basis), a basis transformation from the X basis or the Y basis into the Z basis is performed. By performing a measurement in the Z basis after the basis transformation, it is possible to obtain a result corresponding to the measurement of the qubit state in the "X" or "Y" basis prior to the basis transformation.

In addition, by applying a basis transformation, the measurement of a state represented by the tensor product of the states of a plurality of qubits is reduced to the measurement of a single qubit. That is, by performing the basis transformation, it is possible to obtain the result of measuring an observable on the states of the plurality of qubits, based on the measurement of a single qubit in the Z basis. At this time, if an appropriate basis transformation is performed, it becomes possible to obtain the measurement results of different observables from different qubits.

Observables that are measurable simultaneously with the same basis transformation are needed to be mutually commutative. Therefore, the classical computer 100 determines the commutation relationships between the observables to be measured, as preprocessing for creating a basis transformation circuit that performs an appropriate basis transformation operation.

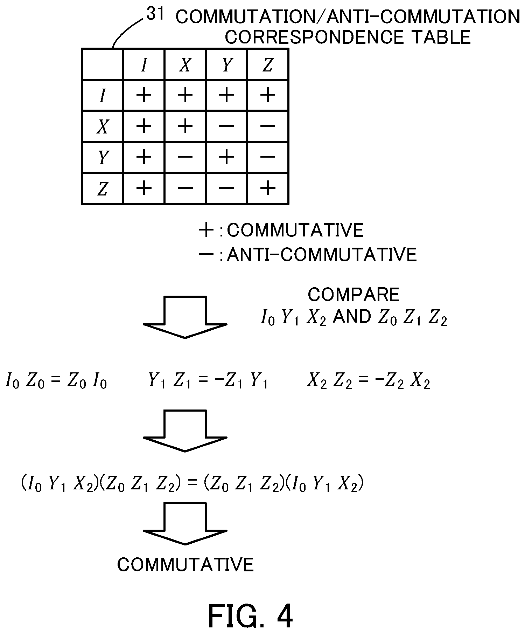

FIG. 4 illustrates an example of determining commutation relationship. A commutation/anti-commutation correspondence table 31 indicates, for each pair of operators, whether they are commutative or anti-commutative. Each intersection of a row and a column has a symbol to indicate whether the operator corresponding to the row and the operator corresponding to the column are commutative or anti-commutative. The symbol "+" indicates that the operators are commutative, and the symbol "-" indicates that the operators are anti-commutative. In the case of commutative operators, the value of their product does not change even if the order in the product is reversed. In the case of anti-commutative operators, however, the sign is reversed when the order in the product is reversed.

For example, in the case of $I_0 Y_1 X_2$ and $Z_0 Z_1 Z_2$, it is determined whether each pair of $I_0$ and $Z_0$, $Y_1$ and $Z_1$, and $X_2$ and $Z_2$ is commutative or anti-commutative. In this case, "$I_0 Z_0 = Z_0 I_0$" (commutative), "$Y_1 Z_1 = -Z_1 Y_1$" (anti-commutative), and "$X_2 Z_2 = -Z_2 X_2$" (anti-commutative). If the number of anti-commutative pairs is even (including zero), the overall product is commutative, that is, "$(I_0 Y_1 X_2) (Z_0 Z_1 Z_2) = (Z_0 Z_1 Z_2) (I_0 Y_1 X_2)$".

The expectation value of each observable belonging to the group of mutually commutative observables may be computed from the measurement result of the same quantum circuit. That is, the observables are simultaneously measurable.

The classical computer 100 performs, for example, partitioning of a plurality of observables to be measured, based on the result of determining the commutation relationships. As a result of the partitioning, a plurality of observable groups (partitions) each including simultaneously measurable observables are generated.

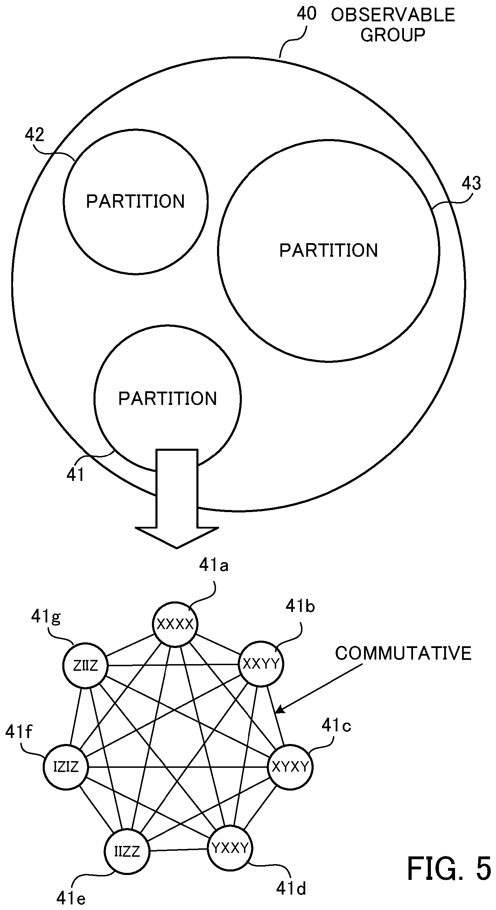

FIG. 5 illustrates an example of partitioning. For example, an observable group 40 including observables to be measured is divided into partitions 41 to 43, each corresponding to a group of simultaneously measurable observables. Each of the partitions 41 to 43 includes a plurality of simultaneously measurable observables. For example, the partition 41 includes seven observables 41a to 41g. In FIG. 5, mutually commutative observables are connected by lines. As illustrated in FIG. 5, each of the observables 41a to 41g included in the one partition 41 is commutative with all of the other observables within the partition 41.

For each observable 41a to 41g, the qubit indices of the qubits to be measured are assigned to its Pauli string in ascending order from the leftmost character. For example, the Pauli string of the observable 41b is "XXYY". This Pauli string represents the product of "X" acting on the qubit with the qubit index "1", "X" acting on the qubit with the qubit index "2", "Y" acting on the qubit with the qubit index "3", and "Y" acting on the qubit with the qubit index "4".

Next, the measurement of the expectation value of an observable will be described in detail. Observable whose expectation values are estimated without basis transformation are each expressed as a tensor product of only "I" and "Z". "I" denotes the identity operator and is represented by the following equation.

$$I = \begin{bmatrix} 1 & 0 \\ 0 & 1 \end{bmatrix} \qquad (1)$$

"Z" is represented by the following equation.

$$Z = \begin{bmatrix} 1 & 0 \\ 0 & -1 \end{bmatrix} \qquad (2)$$

The expectation value of an observable "P" for an arbitrary quantum state $\psi$ is represented by the following expression.

$$\langle \psi | P | \psi \rangle \qquad (3)$$

Here, the expectation value of an observable "Z" is estimated without a basis transformation operation. The reason is as follows.

The probability of obtaining "0" by measuring a single-qubit state "$\psi$" is expressed by the following equation.

$$\langle \psi | 0 \rangle \langle 0 | \psi \rangle = |\langle 0 | \psi \rangle|^2 \qquad (4)$$

The probability of obtaining "1" by measuring a single-qubit state "$\psi$" is expressed by the following equation.

$$\langle \psi | 1 \rangle \langle 1 | \psi \rangle = |\langle 1 | \psi \rangle|^2 \qquad (5)$$

On the other hand, "Z" may be written as the right-hand side of the following equation.

$$Z = \begin{bmatrix} 1 & 0 \\ 0 & -1 \end{bmatrix} = |0\rangle \langle 0| - |1\rangle \langle 1| \qquad (6)$$

From Equation (6), the expectation value of "Z" is represented by the following equation.

$$\langle \psi | Z | \psi \rangle = \langle \psi | 0 \rangle \langle 0 | \psi \rangle - \langle \psi | 1 \rangle \langle 1 | \psi \rangle \qquad (7)$$

The first term on the right-hand side of Equation (7) represents the probability of obtaining "0" by measurement, and the second term represents the probability of obtaining "1" by measurement. Therefore, the expectation value of "Z" is computed from the probability of obtaining "0" by measurement and the probability of obtaining "1" by measurement.

In the case where the observable "P" is represented by the tensor product of "I" and "Z", the number of "1"s appearing in the results of measuring qubits with the qubit indices to which "Z" is applied without basis transformation is counted. Then, the expectation value "<$\psi$|P|$\psi$>" is obtained by subtracting the probability that the number of qubits whose measurement results are "1" is odd from the probability that the number of qubits whose measurement results are "1" is even.

For example, it is assumed that the expectation value of an observable "ZZI" is to be obtained for the state of three qubits ($q_1$, $q_2$, $q_3$). In this case, the expectation value is obtained by subtracting the probability that the result of measuring

the qubits "$q_1$" and "$q_2$" is either "01" or "10" from the probability that the result of measuring the qubits "$q_1$" and "$q_2$" is either "11" or "00". The result of measuring the qubit "$q_3$" to which "I" is applied does not affect the expectation value of the observable "ZZI".

In this way, the expectation values of all observables each represented by the tensor product of only "I" and "Z" are computed from the results of measuring qubits without basis transformation. That is, they are simultaneously measurable. In the case where the number of qubits operated in the quantum circuit is n (n is a natural number), $2^n - 1$ observables are simultaneously measurable excluding the trivial observable "III ... I".

Among the observables 41a to 41g illustrated in FIG. 5, the observables 41e to 41g are each represented using only "I" and "Z", and their expectation values are simultaneously measurable without basis transformation. On the other hand, the observables 41a to 41d include "X" or "Y".

"X" is represented by the following equation.

$$X = \begin{bmatrix} 0 & 1 \\ 1 & 0 \end{bmatrix} \tag{8}$$

"Y" is represented by the following equation.

$$Y = \begin{bmatrix} 0 & -i \\ i & 0 \end{bmatrix} \tag{9}$$

In the case where the observable "P" includes "X" or "Y" other than "I" and "Z", a basis transformation operation is performed before measurement. In this case, an appropriate basis transformation operation "B" is performed to transform "P" into "P'" that is represented by a tensor product of "I" and "Z". The transformation into "P'" is expressed by the following equation.

$$\langle \psi | P | \psi \rangle = \langle \psi | B^{\dagger} P' B | \psi \rangle = \langle \psi' | P' | \psi' \rangle \tag{10}$$

where $|\psi'\rangle = B |\psi\rangle$

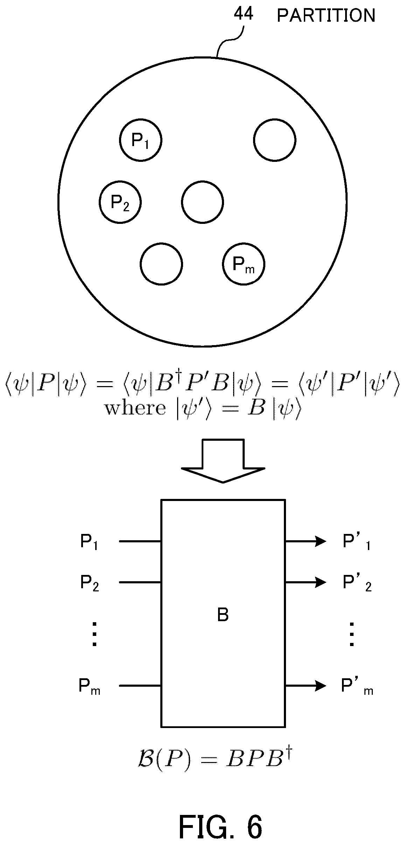

FIG. 6 illustrates an example of a basis transformation operation. It is assumed that observables included as elements in a partition 44 are "$P_1, P_2, ..., P_m$" (m is a natural number). The transformation of these observables by the basis transformation operation "B" may be expressed as "B(P) = BPB$^\dagger$". Assume that the observables (Pauli strings) obtaining by transforming the observables "$P_1, P_2, ..., P_m$" are "$P'_1, P'_2, ..., P'_m$". At this time, the basis transformation operation "B" is determined so that all the observables "$P'_1, P'_2, ..., P'_m$" after the transformation are each expressed as a tensor product of only "I" and "Z".

By causing the quantum computer 200 to execute a basis transformation circuit corresponding to the basis transformation operation, it becomes possible to measure the expectation values of observables after the basis transformation.

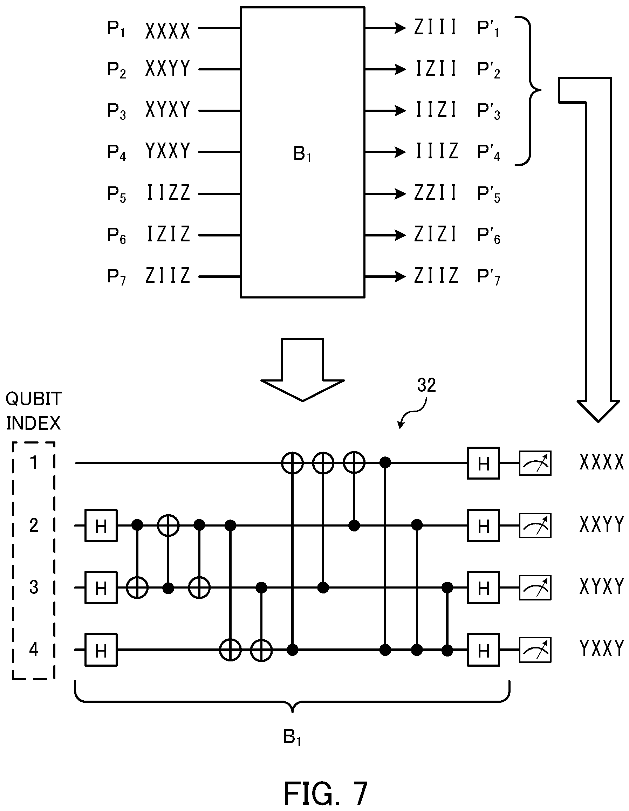

FIG. 7 illustrates a first example of a basis transformation circuit corresponding to a basis transformation operation. In the example of FIG. 7, the number of qubits to be measured is "4". In this case, the number of observables each represented by a tensor product of only "I" and "Z" is "15" ($2^4 - 1$) ("IIII" is excluded because it is trivial).

A basis transformation operation "$B_1$" transforms the observables "$P_1, P_2, P_3, P_4, P_5, P_6, P_7$" into observables "$P'_1, P'_2, P'_3, P'_4, P'_5, P'_6, P'_7$". For example, the observable "$P_1$" of "XXXX" is transformed into the observable "$P'_1$" of "ZIII". The observable "$P_2$" of "XXYY" is transformed into the observable "$P'_2$" of "IZII". The observable "$P_3$" of "XYXY" is transformed into the observable "$P'_3$" of "IIZI". The observable "$P_4$" of "YXXY" is transformed into the observable "$P'_4$" of "IIIZ". The observable "$P_5$" of "IIZZ" is transformed into the observable "$P'_5$" of "ZZII". The observable "$P_6$" of "IZIZ" is transformed into the observable "$P'_6$" of "ZIZI". The observable "$P_7$" of "ZIIZ" is transformed into the observable "$P'_7$" of "ZIIZ".

In this case, the expectation values of the observables "$P'_1, P'_2, P'_3, P'_4, P'_5, P'_6$, and $P'_7$" after the basis transformation operation "$B_1$" are the expectation values of the corresponding observables "$P_1, P_2, P_3, P_4, P_5, P_6$, and $P_7$".

Each Pauli string of the transformed observables "$P'_1, P'_2, P'_3, P'_4$" corresponding to the observables "P1, P2, P3, P4" includes only one "Z", with all the others being "I". Therefore, for each of the observables "$P'_1, P'_2, P'_3, P'_4$", whose Pauli strings include only one "Z", it is possible to compute its expectation value based on measurement results of a single qubit. Therefore, by repeatedly performing the measurement on the qubits with the qubit indices "1" to "4", the expectation values of the observables "$P_1, P_2, P_3, P_4$" are obtained based on the measurement results. Further, the expectation values of the

observables "$P_5$, $P_6$, $P_7$" are computed based on the measurement results of the qubits with the qubit indices "1" to "4".

Accordingly, the classical computer 100 creates a basis transformation circuit 32 corresponding to the basis transformation operation "$B_1$". By executing the basis transformation circuit 32 after the quantum circuit for solving the problem to be solved, the measurement result of the qubit with the qubit index "1" corresponds to the expectation value of the observable "XXXX. The measurement result of the qubit with the qubit index "2" corresponds to the expectation value of the observable "XXYY". The measurement result of the qubit with the qubit index "3" corresponds to the expectation value of the observable "XYXY". The measurement result of the qubit with the qubit index "4" corresponds to the expectation value of the observable "YXXY". The number of two-qubit gates in the basis transformation circuit 32 is "11".

At this time, the number of two-qubit gates used in the basis transformation varies depending on which observables of Pauli strings before the basis transformation operation are assigned to observables whose expectation values are each obtained based on measurements of a single qubit after the basis transformation operation.

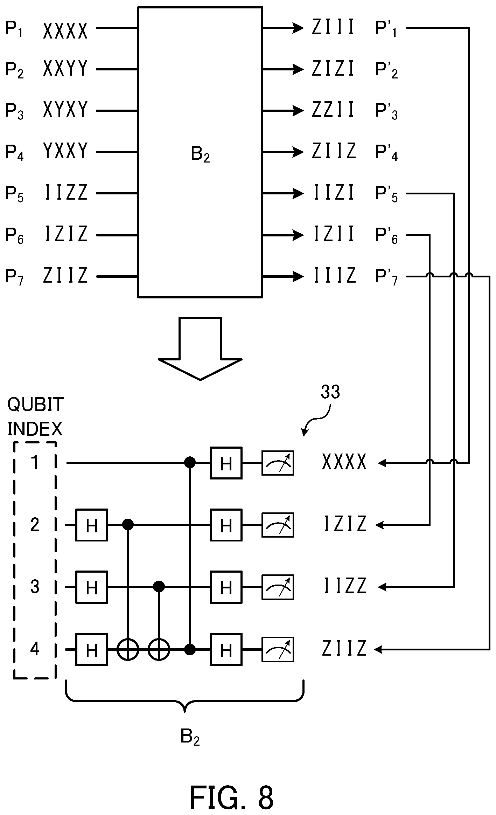

FIG. 8 illustrates a second example of a basis transformation circuit corresponding to a basis transformation operation. FIG. 8 illustrates an example in which a basis transformation operation "$B_2$" different from the basis transformation operation "$B_1$" illustrated in FIG. 7 is performed.

The basis transformation operation "$B_2$" transforms the observable "$P_1$" of "XXXX" into the observable "$P'_1$" of "ZIII". The observable "$P_2$" of "XXYY" is transformed into the observable "$P'_2$" of "ZIZI". The observable "$P_3$" of "XYXY" is transformed into the observable "$P'_3$" of "ZZII". The observable "$P_4$" of "YXXY" is transformed into the observable "$P'_4$" of "ZIIZ". The observable "$P_5$" of "IIZZ" is transformed into the observable "$P'_5$" of "IIZI". The observable "$P_6$" of "IZIZ" is transformed into the observable "$P'_6$" of "IZII". The observable "$P_7$" of "ZIIZ" is transformed into the observable "$P'_7$" of "IIIZ".

Each Pauli string of the transformed observables "$P'_1$, $P'_5$, $P'_6$, $P'_7$" corresponding to the observables "$P_1$, $P_5$, P6, $P_7$" includes only one "Z", with the others being "I". Therefore, by repeatedly performing the measurement on the qubits with the qubit indices "1" to "4", the expectation values of the observables "$P_1$, $P_5$, $P_6$, $P_7$" are obtained based on the measurement results. Further, the expectation values of the observables "$P_2$, $P_3$, $P_4$" are computed based on the measurement results of the qubits with the qubit indices "1" to "4".

Therefore, the classical computer 100 creates a basis transformation circuit 33 corresponding to the basis transformation operation "$B_2$". After the basis transformation circuit 33 is executed after the quantum circuit for solving the problem to be solved, the measurement result of the qubit with the qubit index "1" corresponds to the expectation value of the observable "XXXX". The measurement result of the qubit with the qubit index "2" corresponds to the expectation value of the observable "IZIZ". The measurement result of the qubit with the qubit index "3" corresponds to the expectation value of the observable "IIZZ". The measurement result of the qubit with the qubit index "4" corresponds to the expectation value of the observable "ZIIZ". The number of two-qubit gates in the basis transformation circuit 33 is "3".

As seen from the basis transformation circuit 32 and 33 illustrated in FIGS. 7 and 8, the number of two-qubit gates included in a basis transformation circuit varies depending on which tensor-product observables "$P'_1$, $P'_2$, $P'_3$, $P'_4$, $P'_5$, $P'_6$, and $P'_7$" the observables "$P_1$, $P_2$, $P_3$, $P_4$, $P_5$, $P_6$, and $P_7$" are assigned to.

Next, basic four operations in basis transformation operations will be described.

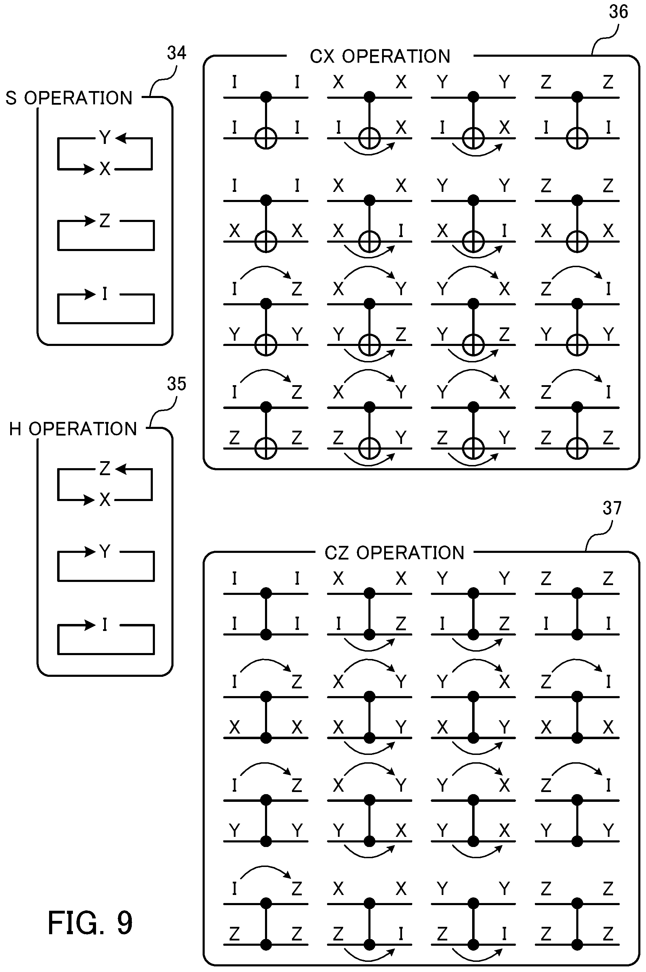

FIG. 9 illustrates examples of basis transformation operations. The basis transformation operations include an S operation 34, an H operation 35, a CX operation 36, and a CZ operation 37.

The S operation 34 is an operation corresponding to a $\pi/2$ phase shift quantum gate (S gate). When the S operation 34 is applied to a qubit, "Y" on the qubit is transformed into "X", and "X" is transformed into "Y". "Z" and "I" remain unchanged by the S operation 34.

The H operation 35 is an operation corresponding to a Hadamard gate (H gate). When the H operation 35 is applied to a qubit, "Z" on the qubit is transformed into "X", and "X" is transformed into "Z". "Y" and "I" remain unchanged by the H operation 35.

The CX operation 36 is an operation corresponding to a CX gate (also referred to as a CNOT gate). When the CX operation 36 is performed, the characters corresponding to qubits to be operated for a Pauli string are changed in the following cases.

In the case where the control qubit of the CX operation 36 is "I" and the target qubit thereof is "Y", the control qubit is transformed into "Z". In the case where the control qubit of the CX operation 36 is "I" and the target qubit thereof is "Z", the control qubit is transformed into "Z".

In the case where the control qubit of the CX operation 36 is "X" and the target qubit thereof is "I", the target qubit is transformed into "X". In the case where the control qubit of the CX operation 36 is "X" and the target qubit thereof is "X", the target qubit is transformed into "I". In the case where the control qubit of the CX operation 36 is "X" and the target qubit thereof is "Y", the control qubit is transformed into "Y" and the target qubit is transformed into "Z". In the case where the control qubit of the CX operation 36 is "X" and the target qubit thereof is **"Z",** the control qubit is transformed into **"Y"** and the target qubit is transformed into "Y".

In the case where the control qubit of the CX operation 36 is **"Y"** and the target qubit thereof is "I", the target qubit is transformed into "X". In the case where the control qubit of the CX operation 36 is **"Y"** and the target qubit thereof is **"X",** the target qubit is transformed into "I". In the case where the control qubit of the CX operation 36 **is "Y"** and the target qubit thereof is **"Y",** the control qubit is transformed into **"X"** and the target qubit is transformed into "Z". In the case where the control qubit of the CX operation 36 is "Y" and the target qubit thereof is "Z", the control qubit is transformed into "X" and the target qubit is transformed into "Y".

In the case where the control qubit of the CX operation 36 is "Z" and the target qubit thereof is "Y", the control qubit is transformed into "I". In the case where the control qubit of the CX operation 36 is "Z" and the target qubit thereof is "Z", the control qubit is transformed into "I".

The CZ operation 37 is an operation corresponding to a CZ gate. When the CZ operation 37 is performed, the characters corresponding to qubits to be operated for a Pauli string are changed in the following cases.

In the case where the control qubit of the CZ operation 37 is "I" and the target qubit thereof is "X", the control qubit is transformed into "Z". In the case where the control qubit of the CZ operation 37 is "I" and the target qubit thereof is "Y", the control qubit is transformed into "Z". In the case where the control qubit of the CZ operation 37 is "I" and the target qubit thereof is "Z", the control qubit is transformed into "Z".

In the case where the control qubit of the CZ operation 37 is "X" and the target qubit thereof is "I", the target qubit is transformed into "Z". In the case where the control qubit of the CZ operation 37 is "X" and the target qubit thereof is "X", the control qubit is transformed into "Y" and the target qubit is transformed into "Y". In the case where the control qubit of the CZ operation 37 is "X" and the target qubit thereof is "Y", the control qubit is transformed into "Y" and the target qubit is transformed into "X". In the case where the control qubit of the CZ operation 37 is "X" and the target qubit thereof is "Z", the target qubit is transformed into "I".

In the case where the control qubit of the CZ operation 37 is "Y" and the target qubit thereof is "I", the target qubit is transformed into "Z". In the case where the control qubit of the CZ operation 37 is "Y" and the target qubit thereof is "X", the control qubit is transformed into "X" and the target qubit is transformed into "Y". In the case where the control qubit of the CZ operation 37 is "Y" and the target qubit thereof is "Y", the control qubit is transformed into "X" and the target qubit is transformed into "X". In the case where the control qubit of the CZ operation 37 is "Y" and the target qubit thereof is "Z", the target qubit is transformed into "I.

In the case where the control qubit of the CZ operation 37 is "Z" and the target qubit thereof is "X", the control qubit is transformed into "I". In the case where the control qubit of the CZ operation 37 is "Z" and the target qubit thereof is "Y", the control qubit is transformed into "I".

Among these four operations, only the two-qubit operations (CX operation and CZ operation) enable transformation to "I". There are cases where "X" and "Z" are each transformed directly into "I". "Y" is transformed into "X" or "Z" only. Therefore, "Y" is transformed into "X" or "Z" once, which is then transformed into "I".

By combining the four operations, it is possible to generate a basis transformation operation for transforming a plurality of simultaneously measurable observables into observables of Pauli strings each including only "I" and "Z". By arranging quantum gates corresponding respectively to the basic operations included in the generated basis transformation operation, a basis transformation circuit that implements the basis transformation operation is created.

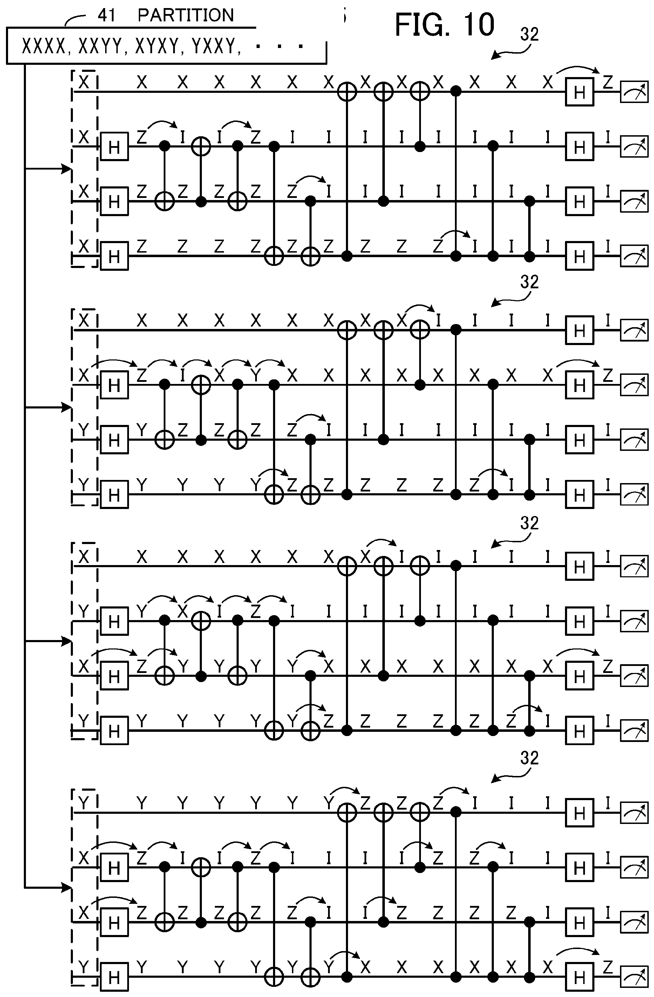

FIG. 10 illustrates a first example of the transformation of Pauli strings representing observables using a basis transformation circuit. FIG. 10 illustrates an example of a basis transformation operation that transforms the Pauli strings of observables "XXXX, XXYY, XYXY, YXXY" in the partition 41 into "ZIII, IZII, IIZI, IIIZ". This basis transformation operation is implemented by the basis transformation circuit 32.

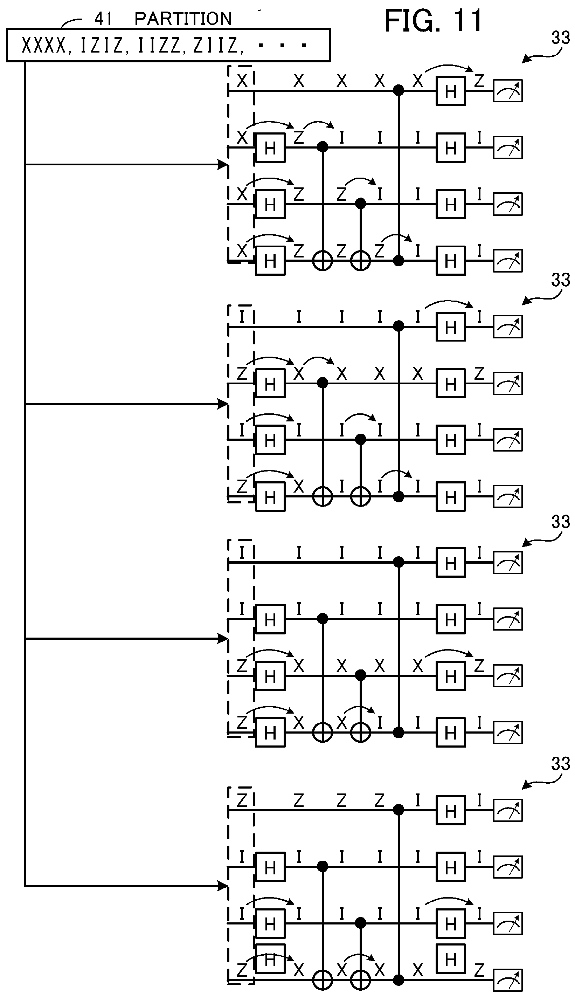

FIG. 11 illustrates a second example of the transformation of Pauli strings representing observables using a basis transformation circuit. FIG. 11 illustrates an example of a basis transformation operation that transforms the Pauli strings of observables "XXXX, IZIZ, IIZZ, ZIIZ" in the partition 41 into "ZIII, IZII, IIZI, IIIZ". This basis transformation operation is implemented by the basis transformation circuit 33.

The basis transformation circuits 32 and 33 illustrated in FIGS. 10 and 11 are implemented using H gates, CX gates, and CZ gates. If S gates are provided in addition to these quantum gates, it is possible to create an appropriate basis transformation circuit for any Pauli strings representing observables before transformation.

Many gate operations in the basis transformation circuit 32 and the basis transformation circuit 33 are each gate operation that transforms a character other than "I" in the Pauli string of an observable before the basis transformation into the character "I". Therefore, if the number of characters other than "I" in an observable before the basis transformation is fewer, the number of two-qubit gates used in the basis transformation becomes small.

For example, in the basis transformation illustrated in FIG. 10, "I" is not included in any Pauli strings of the four observables before the basis transformation. On the other hand, in the basis transformation illustrated in FIG. 11, a total of six "I"s are included in the four observables before the basis transformation. In the case where an observable before the basis transformation contains "I" for a qubit, there is no need to perform transformation into "I" for the qubit. For this reason, the number of two-qubit gates used in the basis transformation circuit 33 illustrated in FIG. 11 is small. That is, the depth of the basis transformation circuit is reduced by appropriately selecting observables to be transformed into "ZIII, IZII, IIZI, IIIZ" by a basis transformation from the simultaneously measurable observables.

Hereinafter, a set of observables whose expectation values are each obtained based on the measurement of a single qubit after the basis transformation is referred to as a generator "G".

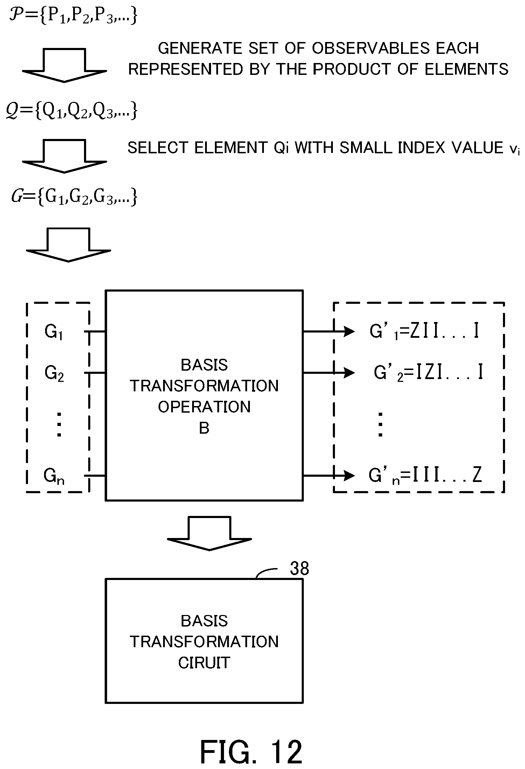

FIG. 12 illustrates an example of a method of selecting observables to be included in the generator "G". The classical computer 100 sets the elements in a partition "P" as $\{P_1, P_2, P_3, ...\}$.

The classical computer 100 generates a set of observables "Q = $\{Q_1, Q_2, Q_3, ...\}$" that are each represented by the product of observables in the partition "P". Here, the product of observables is defined as the qubit-wise product of Pauli operators (X, Y, Z, I) assigned to the same qubit indices. The product of characters "X, Y, or Z" and "I" yields the original character "X, Y, or Z". The product of identical characters yields "I". The product of "X" and "Z" yields "Y". The product of "X" and "Y" yields "Z". The product of "Y" and "Z" yields "X". Based on Equations (6), (8), and (9), XZ = -iY, XY = iZ, and YZ = iX. Scalar factors are ignored here for convenience.

The maximum number of elements in the set "Q" is $2^n$ - 1 (n is the number of qubits). In the case where the number of elements in the set "Q" is less than the maximum, the classical computer 100 performs a process of increasing the number of elements in the set "Q" by adding observables that are measurable simultaneously with the observables included in the set "Q".

Next, the classical computer 100 generates the generator "G" of observables from the set "Q" in accordance with the following procedure.

(Procedure 1) The classical computer 100 selects one observable from the set "Q" according to a predetermined selection criterion, and adds the observable as an element "$G_1$" to "G".
(Procedure 2) The classical computer 100 removes the observable corresponding to the element "$G_1$" from the set "Q".
(Procedure 3) The classical computer 100 selects one observable from the set "Q" according to the predetermined selection criterion, and adds the observable as an element "$G_2$" to "G".
(Procedure 4) The classical computer 100 removes, from the set "Q", the observable corresponding to the element "$G_2$" and observables in the set "Q" that are each represented by the product of the element "$G_2$" and another element in "G".

Thereafter, the classical computer 100 repeats Procedure 3 and Procedure 4 until the number of elements in the set "Q" becomes "0".

Here, for the predetermined selection criterion in Procedure 1 and Procedure 3, for example, an index value "$v_i$" that is determined for each element "$Q_i$" (i is a natural number) in the set "Q" is used. The index value "$v_i$" is defined as "$v_i$ = (the number of character 'X's) + (the number of character 'Z's) + (the number of character 'Y's) $\times$ 2)". The classical computer 100 selects the element with the smallest index value "$v_i$" in Procedure 1 and Procedure 3.

Only "the number of character 'Y's" is weighted by a factor of 2 in the calculation of the index value "$v_i$". This is because "Y" is transformed into "I" via a basis transformation to "X" or "Z". If the number of "Y"s increases, the number of two-qubit gates also increases.

As described above, the generator "G" including the selected elements is generated. Then, the classical computer 100 determines a basis transformation operation that transforms the elements "$G_1, G_2, ..., G_n$" in the generator "G" into "$G'_1, G'_2, ..., G'_n$". Each of "$G'_1, G'_2, ..., G'_n$" is an observable represented by a character string in which a character corresponding to only one qubit is "Z" and the other characters are "I". Further, the classical computer 100 generates a basis transformation circuit 38 so as to cause the quantum computer 200 to execute the basis transformation operation "B".

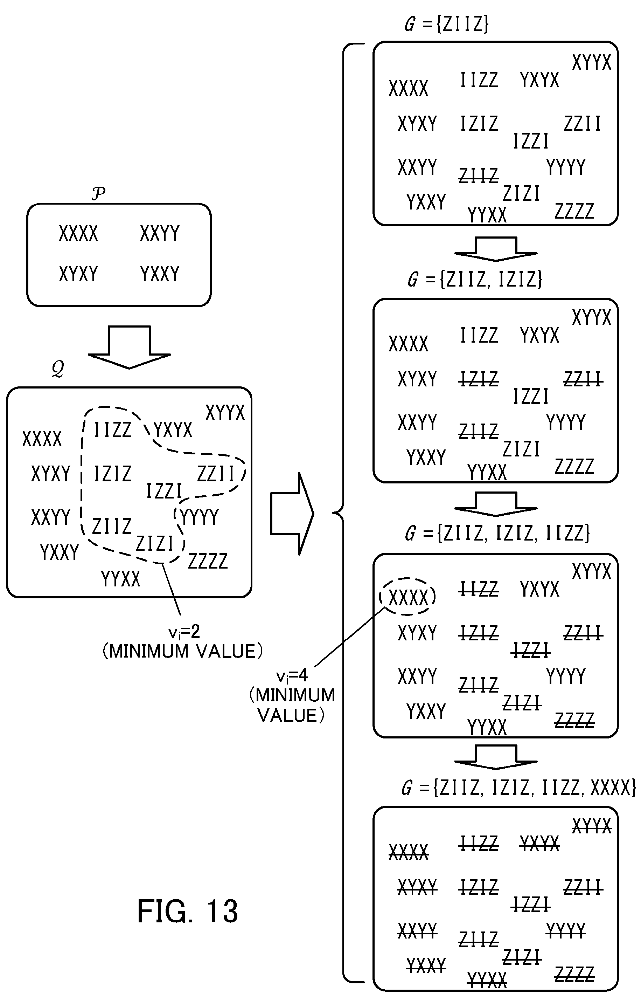

FIG. 13 illustrates an example of a process of generating a generator "G". It is assumed that the observables included in a partition "P = {XXXX, XXYY, XYXY, YXXY}" are to be simultaneously measured. The classical computer 100 generates a set "Q" including the observables included in the partition "P" and observables that are each represented by the tensor product of those observables. The set "Q" includes "15" (i.e., $2^4$ - 1) observables, which is the maximum number of elements.

The classical computer 100 calculates an index value "$v_i$" for each observable in the set "Q". In the example of FIG. 13, six observables, i.e., "IIZZ, IZIZ, ZIIZ, ZZII, IZZI, ZIZI", have the minimum value at "$v_i$ = 2".

The classical computer 100 first selects one of "IIZZ, IZIZ, ZIIZ, ZZII, IZZI, and ZIZI". In the example of FIG. 13, "ZIIZ" is selected. The classical computer 100 includes the selected "ZIIZ" in the generator "G" and removes it from the set "Q".

The classical computer 100 then selects one of "IIZZ, IZIZ, ZZII, IZZI, and ZIZI". In the example of FIG. 13, "IZIZ" is selected. The classical computer 100 includes the selected "IZIZ" in the generator "G" and removes it from the set "Q". Further, the classical computer 100 removes, from the set "Q", "ZZII" represented by the product of "ZIIZ" already included in the generator "G" and the newly added "IZIZ".

Subsequently, the classical computer 100 selects one of "IIZZ, ZZII, IZZI, and ZIZI". In the example of FIG. 13, "IIZZ" is selected. The classical computer 100 includes the selected "IIZZ" in the generator "G" and removes it from the set "Q". Further, the classical computer 100 removes, from the set "Q", "ZIZI and IZZI" each represented by the product of "ZIIZ or IZIZ" already included in the generator "G" and the newly added "IIZZ". Further, the classical computer 100 removes, from the set "Q", "ZZZZ" represented by the product of the product "ZZII" of "ZIIZ and IZIZ" already included in the generator "G" and the newly added "IIZZ".

As a result, all the observables with the index value "$v_i = 2$" are removed from the set "Q". Therefore, the classical computer 100 selects the observable "XXXX" that has the smallest index value "$v_i = 4$" from the remaining observables in the set "Q". The classical computer 100 includes the selected "XXXX" in the generator "G" and removes it from the set "Q". Further, the classical computer 100 removes, from the set "Q", observables that are generated as the product of "XXXX" and one or more of the observables already included in the generator "G". As a result, the set "Q" becomes an empty set.

The classical computer 100 determines a basis transformation procedure based on the generated generator "G", and creates a basis transformation circuit corresponding to the basis transformation procedure.

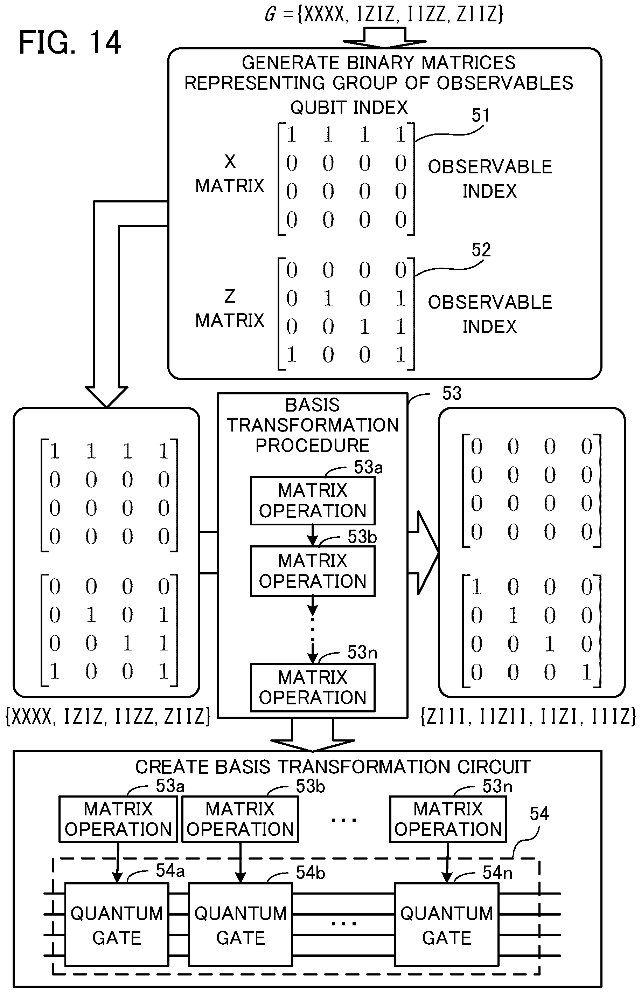

FIG. 14 illustrates an example of a method of creating a basis transformation circuit. The classical computer 100 represents the group of observables included in a generator "G = {XXXX, IZIZ, IIZZ, ZIIZ}" using two binary matrices: an X matrix 51 and a Z matrix 52. The X matrix 51 and the Z matrix 52 are n × n square matrices (n is the number of qubits). Each column corresponds to a qubit index assigned to a qubit. Each row corresponds to an observable index identifying an observable included in the generator "G".

In the example of FIG. 14, the observable index of "XXXX" is "1" (first row). The observable index of "IZIZ" is "2" (second row). The observable index of "IIZZ" is "3" (third row). The observable index of "ZIIZ" is "4" (fourth row).

The X matrix 51 indicates the position of "X" in the Pauli string of each observable. The Z matrix 52 indicates the position of "Z" in the Pauli string of each observable. Note that "Y" is treated as both "X" and "Z".

For example, an element in the X matrix 51 is "1" when, in the observable corresponding to the row of the element, the character with the qubit index corresponding to the column of the element is "X" or "Y"; and it is "0" otherwise. An element in the Z matrix 52 is "1" when, in the observable corresponding to the row of the element, the character with the qubit index corresponding to the column of the element is "Z" or "Y"; and it is "0" otherwise.

The classical computer 100 obtains matrix operations 53a, 53b, ..., and 53n for transforming the X matrix 51 and the Z matrix 52 so that they represent "ZIII, IZII, IIZI, IIIZ". The sequence of the obtained matrix operations 53a, 53b, ..., and 53n is used as the basis transformation procedure 53. Then, the classical computer 100 creates a basis transformation circuit 54 by arranging quantum gates 54a, 54b, ..., and 54n respectively corresponding to the matrix operations 53a, 53b, ..., and 53n included in the basis transformation procedure 53.

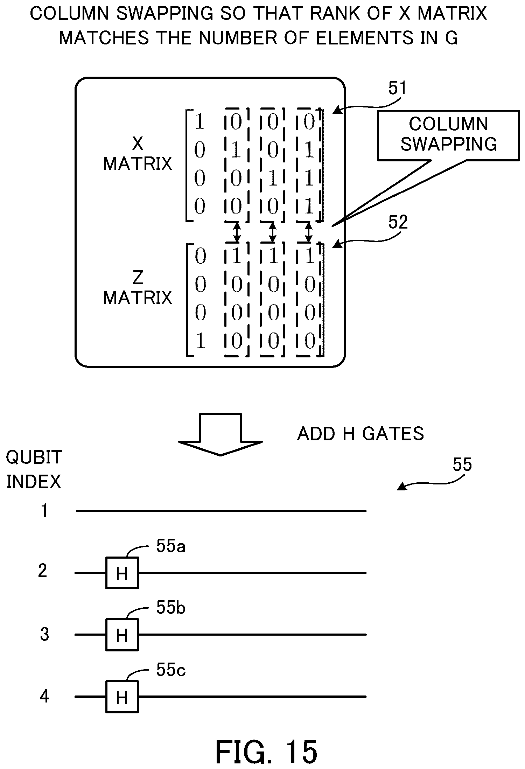

Hereinafter, the matrix operations for generating the basis transformation procedure will be specifically described with reference to FIGS. 15 to 19.

FIG. 15 illustrates an example (1/5) of a basis transformation operation. First, the classical computer 100 swaps the columns of the X matrix 51 and the Z matrix 52 for each qubit index so that the rank of the X matrix 51 matches the number of elements in the generator "G". In the example of FIG. 15, the number of elements in the generator "G" is "4". Therefore, the classical computer 100 performs the column swapping so that the rank of the X matrix 51 becomes "4". For example, with regard to each column corresponding to the qubit indices "2, 3, and 4", the classical computer 100 swaps the column of the X matrix 51 and the column of the Z matrix 52.

The matrix operation of swapping columns corresponds to an H operation among the basic operations of basis transformation. Therefore, the classical computer 100 arranges H gates 55a to 55c on the qubits with the qubit indices "2, 3, and 4" in a basis transformation circuit 55.

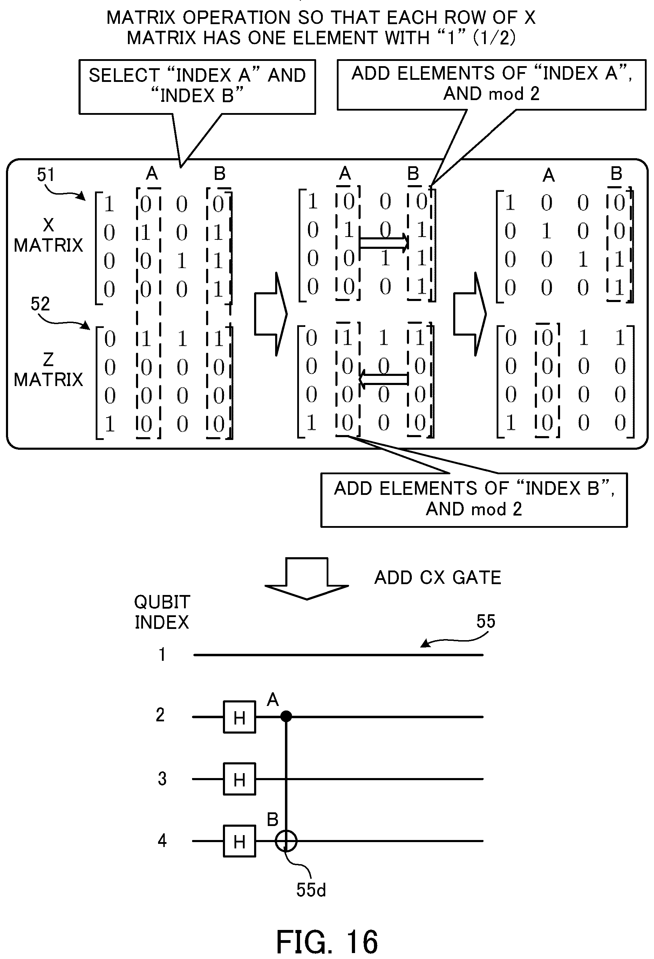

FIG. 16 illustrates the example (2/5) of the basis transformation operation. The classical computer 100 performs a matrix operation so that each row of the X matrix 51 has only one element with the value "1". Specifically, the classical computer 100 selects two qubit indices. The classical computer 100 sets one of the selected qubit indices as "index A" and the other as "index B". In the example of FIG. 16, the qubit index "2" is set as "index A", and the qubit index "4" is set as "index B".

The classical computer 100 adds the column elements of "index A" to the column elements of "index B" in the X matrix 51 and calculates the remainders (mod 2) obtained by dividing each sum by 2. The classical computer 100 updates the column elements of "index B" to the corresponding remainder values.

The classical computer 100 adds the column elements of "index B" to the column elements of "index A" in the Z matrix 52, and calculates the remainders (mod 2) obtained by dividing each sum by 2. The classical computer 100 updates the column elements of "index A" to the corresponding remainder values.

The operation illustrated in FIG. 16 corresponds to the CX operation among the basic operations of basis transformation. Therefore, the classical computer 100 arranges, in the basis transformation circuit 55, a CX gate 55d in which the qubit with the qubit index "2" is set as the control qubit and the qubit with the qubit index "4" is set as the target qubit.

As a result of the CX operation illustrated in FIG. 16, the number of "1"s in the second row of the X matrix 51 is reduced from two to one. However, the third row of the X matrix 51 has two elements with the value "1". Therefore, the matrix operation corresponding to the CX operation is repeatedly applied until each row of the X matrix 51 has one element with the value "1".

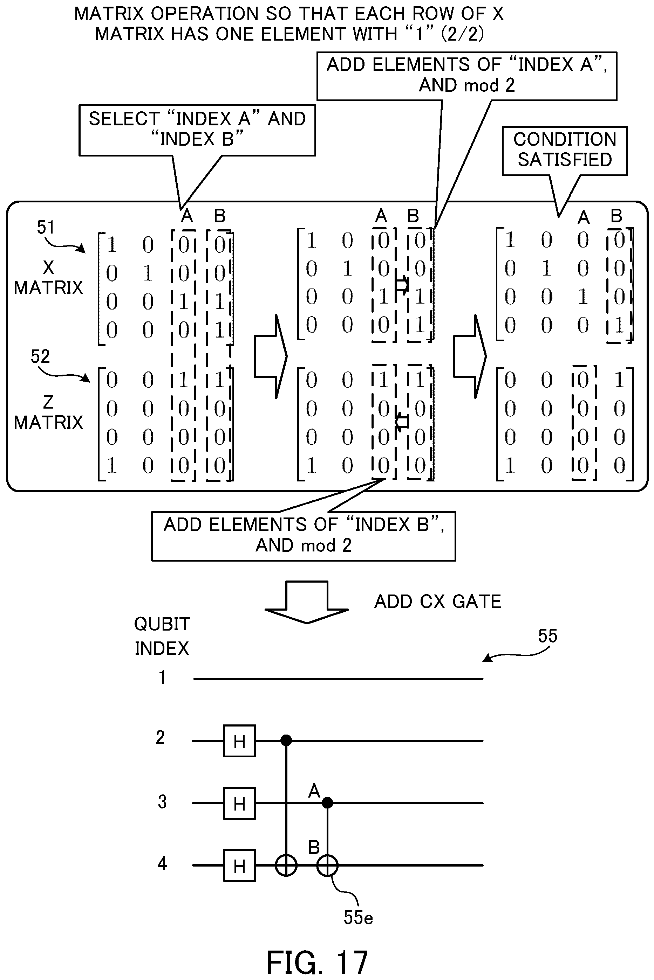

FIG. 17 illustrates the example (3/5) of the basis transformation operation. The classical computer 100 selects two qubit indices for a CX operation so that each row of the X matrix 51 has only one element with the value "1". In the example of FIG. 17, the classical computer 100 selects the qubit index "3" as "index A" and selects the qubit index "4" as "index B".

The classical computer 100 adds the column elements of "index A" to the column elements of "index B" in the X matrix 51, and calculates the remainders (mod 2) obtained by dividing each sum by 2. The classical computer 100 updates the column elements of "index B" to the corresponding remainder values.

The classical computer 100 adds the column elements of "index B" to the column elements of "index A" in the Z-matrix 52, and calculates the remainders (mod 2) obtained by dividing each sum by 2. The classical computer 100 updates the column elements of "index A" to the corresponding remainder values.

Then, the classical computer 100 arranges, in the basis transformation circuit 55, a CX gate 55e in which the qubit with the qubit index "3" is set as the control qubit and the qubit with the qubit index "4" is set as the target qubit.

By performing the above matrix operation, the condition that each row of the X matrix 51 has only one element with the value "1" is satisfied.

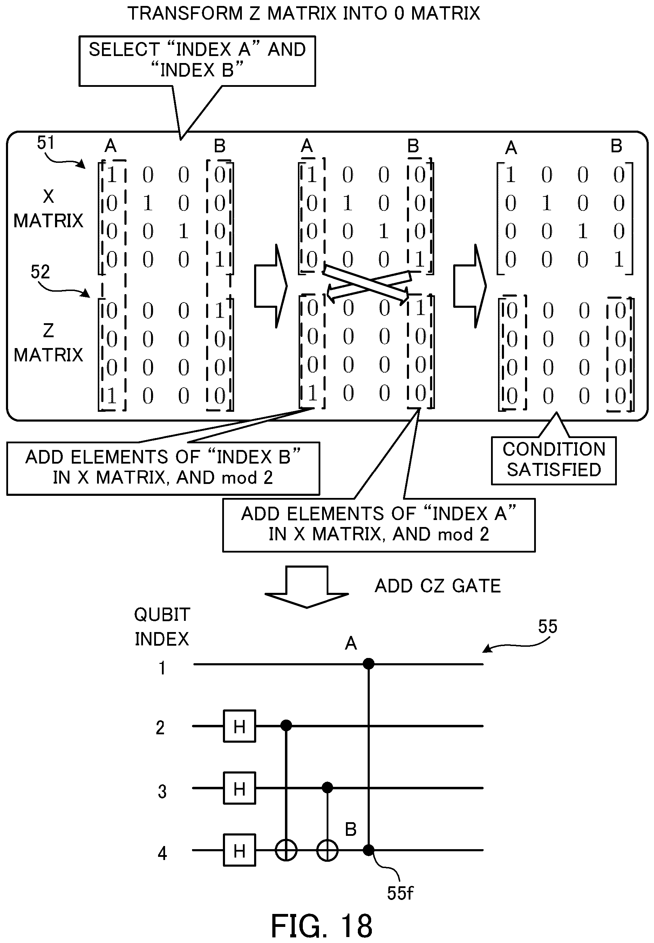

FIG. 18 illustrates the example (4/5) of the basis transformation operation. The classical computer 100 performs a matrix operation so that the Z matrix 52 becomes a zero matrix. Specifically, the classical computer 100 selects two qubit indices. The classical computer 100 sets one of the selected qubit indices as "index A" and the other as "index B". In the example of FIG. 18, the qubit index "1" is set as "index A", and the qubit index "4" is set as "index B".

The classical computer 100 adds the column elements of "index B" in the X matrix 51 to the column elements of "index A" in the Z matrix 52, and calculates the remainders (mod 2) obtained by dividing each sum by 2. The classical computer 100 updates the column elements of "index A" in the Z matrix 52 to the corresponding remainder values.

The classical computer 100 adds the column elements of "index A" in the X matrix 51 to the column elements of "index B" in the Z matrix 52, and calculates the remainders (mod 2) obtained by dividing each sum by 2. The classical computer 100 updates the column elements of "index B" of the Z matrix 52 to the corresponding remainder values.

The operation illustrated in FIG. 18 corresponds to the CZ operation among the basic operations of basis transformation. Therefore, the classical computer 100 arranges, in the basis transformation circuit 55, a CZ gate 55f that operates the qubit with the qubit index "1" and the qubit with the qubit index "4".

By performing this CZ operation, the condition that the Z matrix 52 is a zero matrix is satisfied.

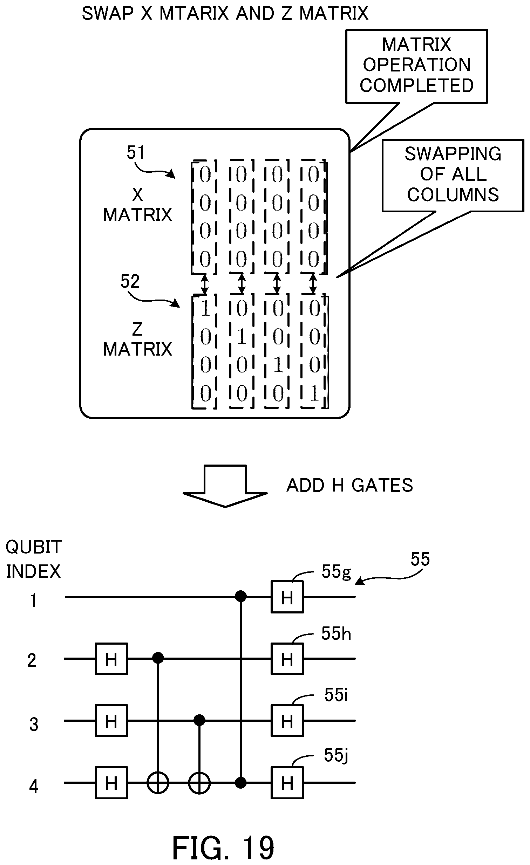

FIG. 19 illustrates the example (5/5) of the basis transformation operation. The classical computer 100 swaps the X matrix 51 and the Z matrix 52 (swaps all columns). This matrix operation corresponds to the H operation among the basic operations of basis transformation. Therefore, the classical computer 100 arranges H gates 55g to 55j on all the qubits in the basis transformation circuit 55.

The observable group represented by the X matrix 51 and the Z matrix 52 after the matrix swap operation includes "ZIII, IZII, IIZI, IIIZ". Therefore, the matrix operation is completed.

In this manner, the basis transformation circuit 55 is created, which makes it possible to obtain the expectation value of each observable included in the generated generator "G" based on the measurement of a single qubit. This basis transformation circuit 55 includes a small number of two-qubit gates. Therefore, the execution of quantum computation using the basis transformation circuit 55 reduces errors at the time of the execution of the quantum circuit.

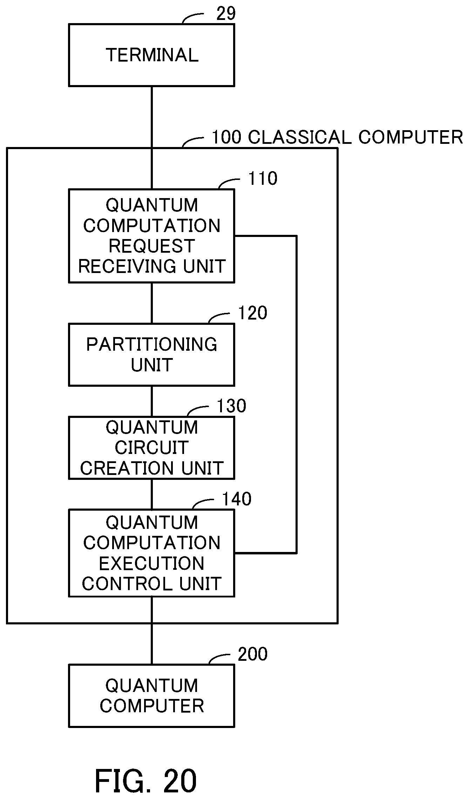

FIG. 20 illustrates an example of functions of the classical computer for executing quantum computation. The classical computer 100 includes a quantum computation request receiving unit 110, a partitioning unit 120, a quantum circuit creation unit 130, and a quantum computation execution control unit 140.

The quantum computation request receiving unit 110 receives a quantum computation request from the terminal 29. Upon receiving the quantum computation request, the quantum computation request receiving unit 110 instructs the partitioning unit 120 to partition the observables to be measured. Upon acquiring the result of the quantum computation from the quantum computation execution control unit 140, the quantum computation request receiving unit 110 transmits the computation result to the terminal 29.

The partitioning unit 120 partitions the observables. The partitioning unit 120 transmits information indicating the partitions generated by the partitioning to the quantum circuit creation unit 130.

The quantum circuit creation unit 130 creates a quantum circuit for solving a problem to be solved. For example, the quantum circuit creation unit 130 creates a quantum circuit that performs quantum computation based on a problem and a basis transformation circuit for enabling measurement of the observables to be measured, which are output from the quantum circuit. For example, the quantum circuit creation unit 130 acquires information on one or more partitions from the partitioning unit 120 and creates a basis transformation circuit for each partition. The quantum circuit creation unit 130 transmits the quantum circuit having a basis transformation circuit added thereto, to the quantum computation execution control unit 140.

The quantum computation execution control unit 140 instructs the quantum computer 200 to execute the quantum circuit. When the quantum computation execution control unit 140 acquires a measurement result from the quantum computer 200, the quantum computation execution control unit 140 computes a solution to the problem to be solved based on the measurement result and transmits the solution to the quantum computation request receiving unit 110.

The following describes, in detail, how the classical computer 100 performs a quantum computation process.

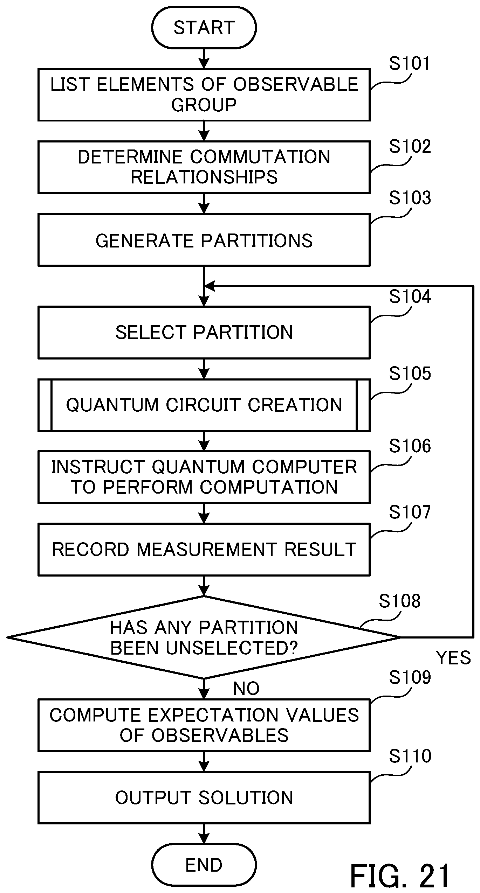

FIG. 21 is a flowchart illustrating an example procedure for quantum computation. Hereinafter, the process illustrated in FIG. 21 will be described in order of step numbers.

[Step S101] Upon receiving a quantum computation request from the terminal 29, the quantum computation request receiving unit 110 lists elements (observables) of an observable group to be measured by quantum computation. Then, the quantum computation request receiving unit 110 instructs the partitioning unit 120 to partition the observable group.

[Step S102] The partitioning unit 120 determines the commutation relationships between the observables included in the observable group.

[Step S103] The partitioning unit 120 generates one or more partitions each including simultaneously measurable observables, based on the commutation relationships between the observables.

[Step S104] The quantum circuit creation unit 130 selects one of unselected partitions among the partitions generated by the partitioning unit 120.

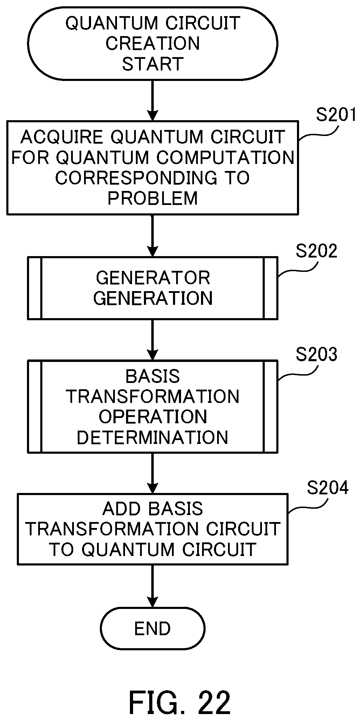

[Step S105] The quantum circuit creation unit 130 creates a quantum circuit in which a basis transformation circuit for enabling simultaneous measurement of the observables included in the selected partition is added to a quantum circuit for computing a solution to the problem to be solved. The details of the quantum circuit creation process will be described later (see FIG. 22).

[Step S106] The quantum computation execution control unit 140 instructs the quantum computer 200 to perform quantum computation based on the created quantum circuit. The quantum computer 200 performs the quantum computation in accordance with the instruction.

[Step S107] The quantum computation execution control unit 140 acquires the measurement result from the quantum computer 200 and records the measurement result in the memory 102 or the storage device 103.

[Step S108] The quantum circuit creation unit 130 determines whether any partition has not been unselected. If any unselected partition is found, the quantum circuit creation unit 130 advances the process to step S104. If all the generated partitions have been selected, the quantum circuit creation unit 130 advances the process to step S109.

[Step S109] The quantum computation execution control unit 140 computes the expectation values of all observables used to compute a solution to the problem to be solved, based on the measurement results obtained by executing the quantum circuits generated respectively for the partitions.

[Step S110] The quantum computation execution control unit 140 computes a solution to the problem to be solved, based on the expectation values of the observables, and outputs the solution. The quantum computation request receiving unit 110 transmits the output solution to the terminal 29.

In this way, the quantum computation according to the quantum computation request is executed. Next, the quantum circuit creation process will be described in detail.

FIG. 22 is a flowchart illustrating an example procedure for a quantum circuit creation process. Hereinafter, the process illustrated in FIG. 22 will be described in order of step numbers.

[Step S201] The quantum circuit creation unit 130 acquires a quantum circuit for quantum computation corresponding to a problem to be solved. For example, if a quantum circuit is included in the quantum computation request from the terminal 29, the quantum circuit creation unit 130 acquires the quantum circuit. In the case where the quantum circuit corresponding to the problem is already prepared in the storage device 103 or another in advance, the quantum circuit creation unit 130 acquires the quantum circuit.

If the acquired quantum circuit includes any quantum gate that is not executable by the quantum computer 200, the quantum circuit creation unit 130 decomposes the quantum gate into native gates that are executable by the quantum computer 200. In addition, the quantum circuit creation unit 130 inserts SWAP gates so that the gate operations of two-qubit gates are executable, according to the connection relationships (connection topology) of the qubits included in the quantum computer 200.

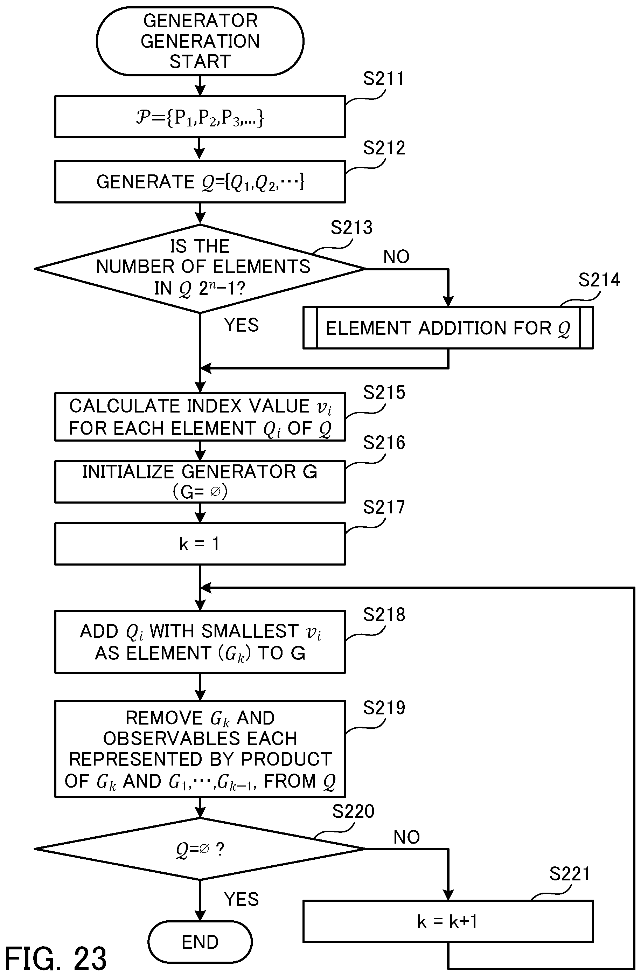

[Step S202] The quantum circuit creation unit 130 generates a generator "G" corresponding to the selected partition. The details of the generator generation process will be described later (see FIG. 23).

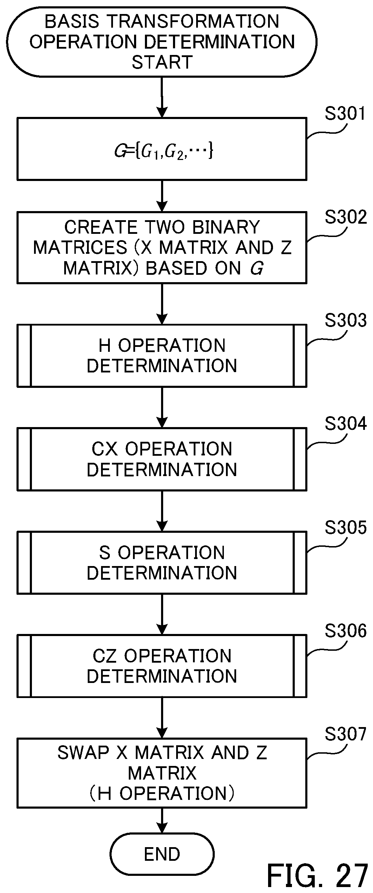

[Step S203] The quantum circuit creation unit 130 determines a basis transformation operation based on the generated generator "G". The details of the basis transformation operation determination process will be described later (see FIG. 27).

[Step S204] The quantum circuit creation unit 130 adds a basis transformation circuit that performs a basis transformation according to the basis transformation procedure generated in step S203, to the end of the quantum circuit acquired in step S201.

Performing the quantum computation using the quantum circuit generated in this way reduces errors.

Next, the process of generating the generator "G" will be described in detail.

FIG. 23 is a flowchart illustrating an example procedure for a generator generation process. Hereinafter, the process illustrated in FIG. 23 will be described in order of step numbers.

[Step S211] The quantum circuit creation unit 130 acquires the selected partition "P = {$P_1$, $P_2$, $P_3$, ...}".

[Step S212] The quantum circuit creation unit 130 generates a set of observables "Q = {$Q_1$, $Q_2$, ...}" including all the elements of the partition "P" and observables each represented by the product of elements in the partition "P".

[Step S213] The quantum circuit creation unit 130 determines whether the number of elements in the set "Q" is $2^n$ - 1 (n denotes the number of qubits used for quantum computation). If the number of elements in the set "Q" is $2^n$ - 1, the quantum circuit creation unit 130 advances the process to step S215. If the number of elements in the set "Q" is less than $2^n$ - 1, the quantum circuit creation unit 130 advances the process to step S214.

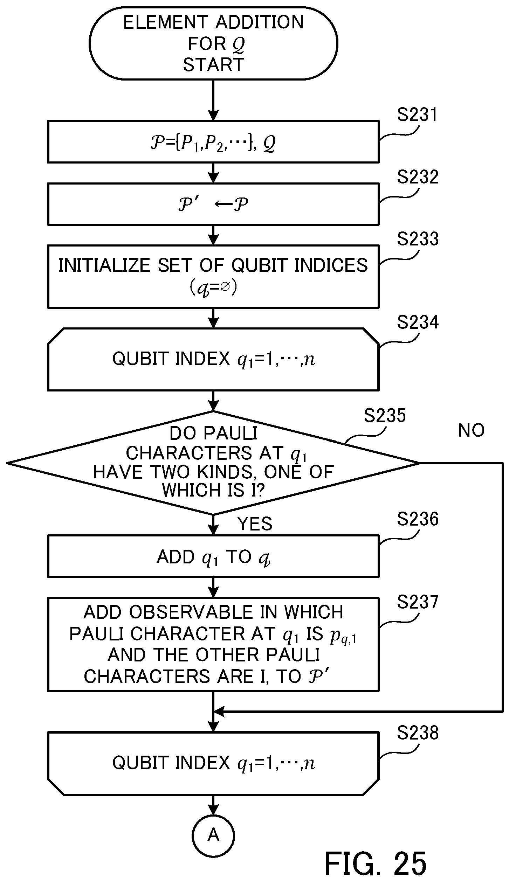

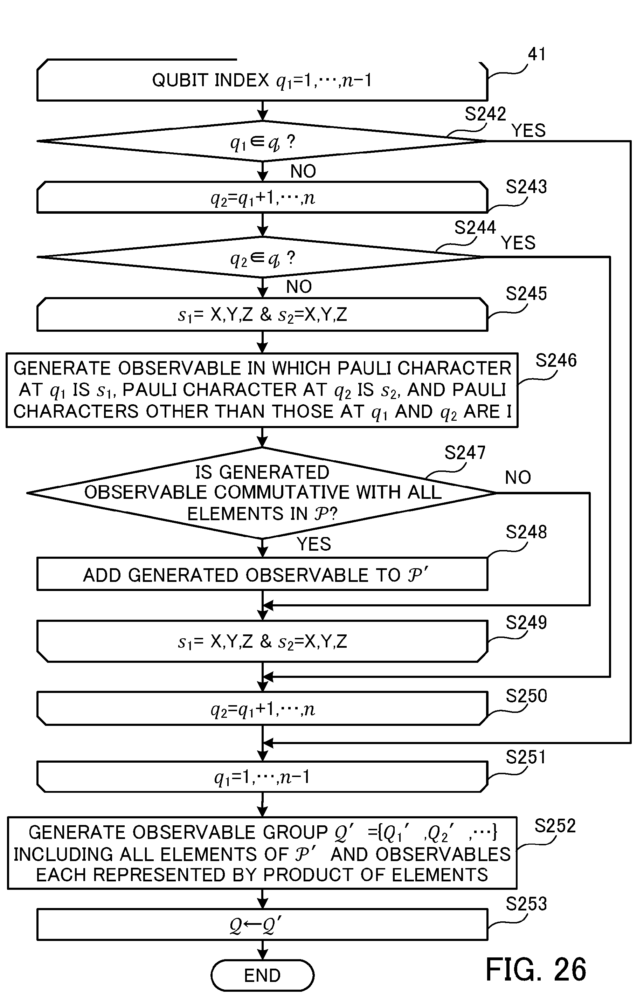

[Step S214] The quantum circuit creation unit 130 performs an element addition process for the set "Q". The details of the element addition process for Q will be described later (see FIGS. 25 and 26).

[Step S215] The quantum circuit creation unit 130 calculates an index value "$v_i$" for each element "$Q_i$" of the set "Q". For example, the quantum circuit creation unit 130 calculates the index value "$v_i$" as the linear sum "$v_i = c_x n_{ix} + c_y n_{iy} + c_z n_{iz}$", where "$n_{ix}, n_{iy}, n_{iz}$" denote the numbers of characters "X, Y, Z" in "$Q_i$", respectively. The linear sum is also referred to as a weighted sum. Each of "$c_x, c_y, c_z$" is a positive real number. For example, "$c_x = c_z = 1$, and $c_y = 2$".

[Step S216] The quantum circuit creation unit 130 initializes a generator "G" indicating an observable group of observables whose expectation values are each obtained based on the measurement of a single qubit (G = empty set).

[Step S217] The quantum circuit creation unit 130 initializes a variable k representing an element number of an observable included in the generator "G" to "1" (k = 1).

[Step S218] The quantum circuit creation unit 130 selects the element "$Q_i$" with the smallest index value "$v_i$". Then, the quantum circuit creation unit 130 adds the selected element "$Q_i$" to the generator "G" as the k-th element "$G_k$".

[Step S219] The quantum circuit creation unit 130 removes the observable corresponding to the element "$G_k$" from the set "Q". The quantum circuit creation unit 130 removes observables each represented by the product of the element "$G_k$" and any of the elements "$G_1, G_2, ...,$ and $G_{k-1}$" from the set "Q".

[Step S220] The quantum circuit creation unit 130 determines whether the set "Q" is an empty set. If the set "Q" is an empty set, the quantum circuit creation unit 130 ends the generator generation process. If any element remains in the set "Q", the quantum circuit creation unit 130 advances the process to step S221.

[Step S221] The quantum circuit creation unit 130 increments the variable k (k = k + 1) by "1". Then, the quantum circuit creation unit 130 advances the process to step S218.

In this way, the generator "G" is generated that includes observables that minimize the number of two-qubit gates in the basis transformation circuit.

Next, the element addition process for Q will be described in detail.

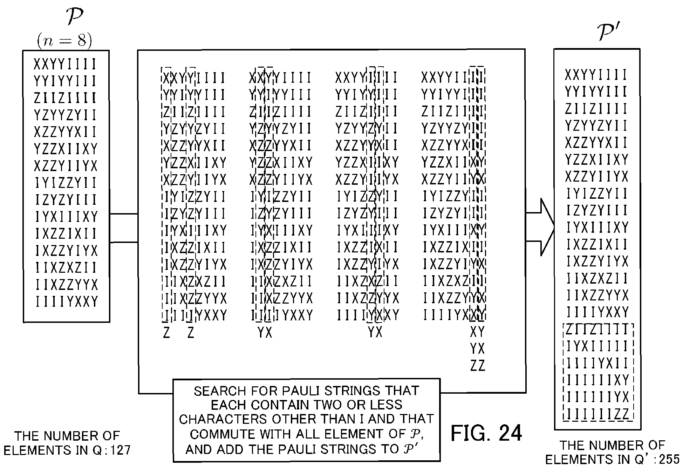

FIG. 24 illustrates an example of adding elements to the set "Q". For example, it is assumed that the number of qubits is "n = 8" and the partition "P" includes observables as illustrated in FIG. 24. In this case, when the set "Q" is generated from only the elements of the partition "P", the number of elements in the set "Q" is 127. This is less than the maximum number of elements "$2^8$ - 1" for the set "Q".

Therefore, the quantum circuit creation unit 130 first generates a set "P'" that is a replica of the partition "P". Next, the quantum circuit creation unit 130 searches for Pauli strings that each contain two or less characters other than "I" and that each commute with all elements of the partition "P", and adds the Pauli strings to "P'". Then, the quantum circuit creation unit 130 generates a set of observables "Q' = {$Q'_1$, $Q'_2$, ...}" including all the elements in the partition "P'" and observables each represented by the product of elements within the partition "P'". In the example of FIG. 24, the number of elements in the set "Q'" is 255, which is the maximum number of elements for the set "Q".

The quantum circuit creation unit 130 sets all the elements in the set "Q'" as the elements in the set "Q". As a result, the number of elements in the set "Q" is $2^n$ - 1.

FIG. 25 is a flowchart (1/2) illustrating an example procedure for an element addition process for Q. Hereinafter, the process illustrated in FIG. 25 will be described in order of step numbers.

[Step S231] The quantum circuit creation unit 130 acquires a partition "P = {$P_1$, $P_2$, ...}" and a set "Q".

[Step S232] The quantum circuit creation unit 130 generates a set "P'" that is a replica of the partition "P" (P' ← P).

[Step S233] The quantum circuit creation unit 130 initializes a set "q" of qubit indices for determination in branch steps S242 and S244 (see FIG. 26) to an empty set.

[Step S234] The quantum circuit creation unit 130 executes steps S235 to S237 for each of the qubit indices "$q_1 = 1, ..., n$" of the qubits used in the quantum circuit.

[Step S235] The quantum circuit creation unit 130 determines whether the following condition is satisfied: with regard to the elements of the partition "P", the Pauli characters at the qubit index "$q_1$" have two kinds, one of which is "I". If the condition is satisfied, the quantum circuit creation unit 130 advances the process to step S236. If the condition is not satisfied, the quantum circuit creation unit 130 advances the process to step S238.

[Step S236] The quantum circuit creation unit 130 adds the qubit index "$q_1$" to the set "q".

[Step S237] The quantum circuit creation unit 130 sets, as "$p_{q_1}$", the Pauli character other than "I" among the two kinds of characters at the qubit index "$q_1$" in the elements of the partition "P". The quantum circuit creation unit 130 adds an observable in which the Pauli character at the qubit index "$q_1$" is "$p_{q,1}$" and the other Pauli characters are "I", to the set "P'".

[Step S238] When steps S235 to S237 are completed for each of the qubit indices "$q_1$ = 1, ..., n" of the qubits used in the quantum circuit, the quantum circuit creation unit 130 advances the process to step S241 (see FIG. 26).

FIG. 26 is a flowchart (2/2) illustrating the example procedure for the element addition process for Q. Hereinafter, the process illustrated in FIG. 26 will be described in order of step numbers.

[Step S241] The quantum circuit creation unit 130 executes steps S242 to S250 for each qubit index "$q_1$ = 1, ..., n - 1" of the qubits used in the quantum circuit.

[Step S242] The quantum circuit creation unit 130 determines whether the qubit index "$q_1$" to be processed is included in the set "q". If "$q_1$" is included in the set "q", the quantum circuit creation unit 130 advances the process to step S251. If "$q_1$" is not included in the set "q", the quantum circuit creation unit 130 advances the process to step S243.

[Step S243] The quantum circuit creation unit 130 executes steps S244 to S249 for each of the qubit indices "$q_2$ = $q_1$ + 1, ..., n" with a value greater than "$q_1$".

[Step S244] The quantum circuit creation unit 130 determines whether the qubit index "$q_2$" to be processed is included in the set "q". If "$q_2$" is included in the set "q", the quantum circuit creation unit 130 advances the process to step S250. If "$q_2$" is not included in the set "q", the quantum circuit creation unit 130 advances the process to step S245.

[Step S245] The quantum circuit creation unit 130 executes steps S246 to S248 for all combinations of elements of the first Pauli character array "$s_1$ = X, Y, Z" and the second Pauli character array "$s_2$ = X, Y, Z".

[Step S246] The quantum circuit creation unit 130 generates an observable in which the Pauli character at on the qubit index "$q_1$" is "$s_1$". the Pauli character at the qubit index "$q_2$" is "$s_2$", and the Pauli characters other than those at "$q_1$" and "$q_2$" are "I".

[Step S247] The quantum circuit creation unit 130 determines whether the observable generated in step S246 is commutative with all the elements in the partition "P". If the observable is commutative with all the elements, the quantum circuit creation unit 130 advances the process to step S248. If the observable is not commutative with at least one of the elements, the quantum circuit creation unit 130 advances the process to step S249.

[Step S248] The quantum circuit creation unit 130 adds the observable generated in step S246 to "P'".

[Step S249] When steps S246 to S248 are completed for all the combinations of the elements in the first Pauli character array "$s_1$ = X, Y, Z" and the second Pauli character array "$s_2$ = X, Y, Z", the quantum circuit creation unit 130 advances the process to step S250.

[Step S250] When steps S244 to S249 are completed for all the qubit indices "$q_2$ = $q_1$ + 1, ..., n" with a value greater than "$q_1$", the quantum circuit creation unit 130 advances the process to step S251.

[Step S251] When steps S242 to S250 are completed for all the qubit indices "$q_1$ = 1, ..., n - 1" of the qubits used in the quantum circuit, the quantum circuit creation unit 130 advances the process to step S252.

[Step S252] The quantum circuit creation unit 130 generates an observable group "Q' = {$Q_1$', $Q_2$', ...}" including all elements of the set "P'" and the observables each represented by the product of elements in "P'".

[Step S253] The quantum circuit creation unit 130 updates "Q" so that the elements in the observable group "Q'" become the elements in "Q".

In this way, elements are added to the set "Q".

Next, the basis transformation operation determination process will be described in detail.

FIG. 27 is a flowchart illustrating an example procedure for the basis transformation operation determination process. Hereinafter, the process illustrated in FIG. 27 will be described step by step.

[Step S301] The quantum circuit creation unit 130 acquires the generator "G = {$G_1$, $G_2$, ...}".

[Step S302] The quantum circuit creation unit 130 creates two binary matrices (an X matrix and a Z matrix) based on the generator "G".

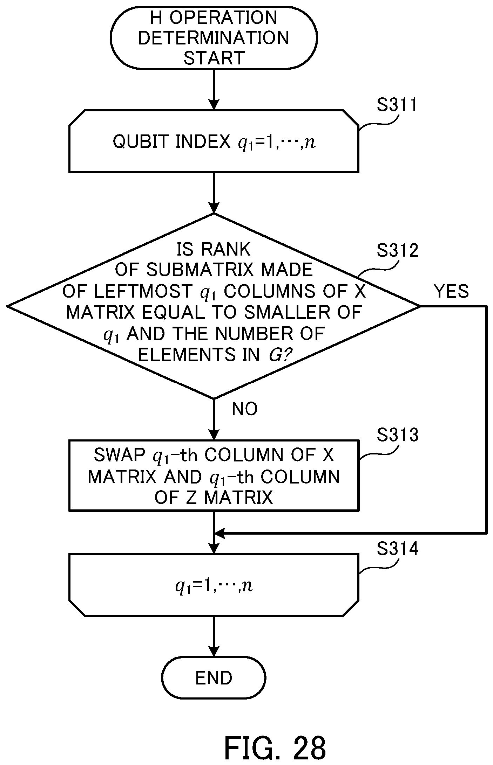

[Step S303] The quantum circuit creation unit 130 performs an H operation determination process. The details of the H operation determination process will be described later (see FIG. 28).

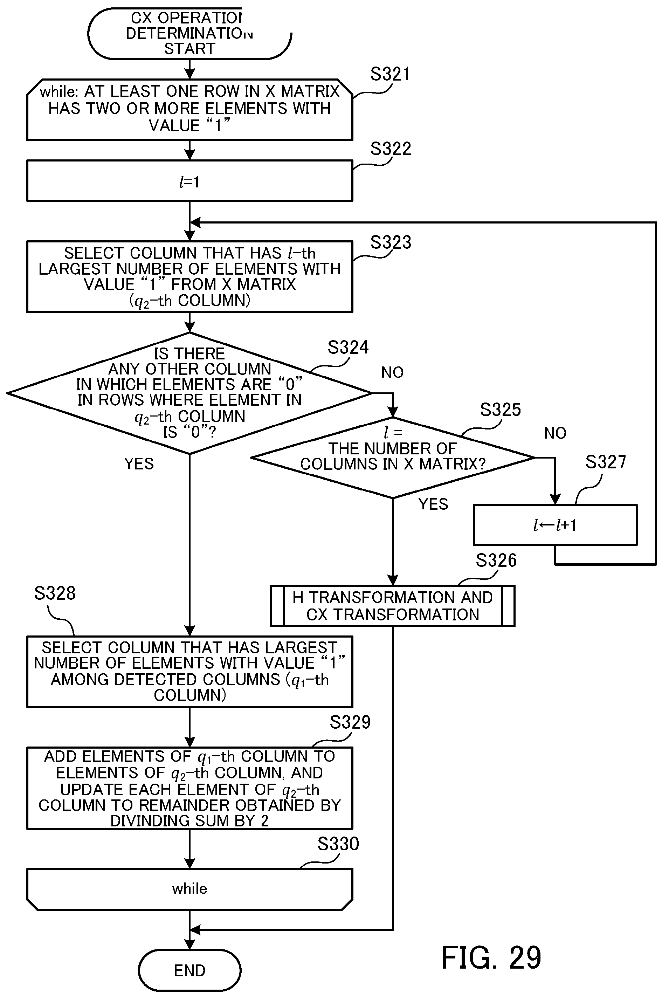

[Step S304] The quantum circuit creation unit 130 performs a CX operation determination process. The details of the CX operation determination process will be described later (see FIG. 29).

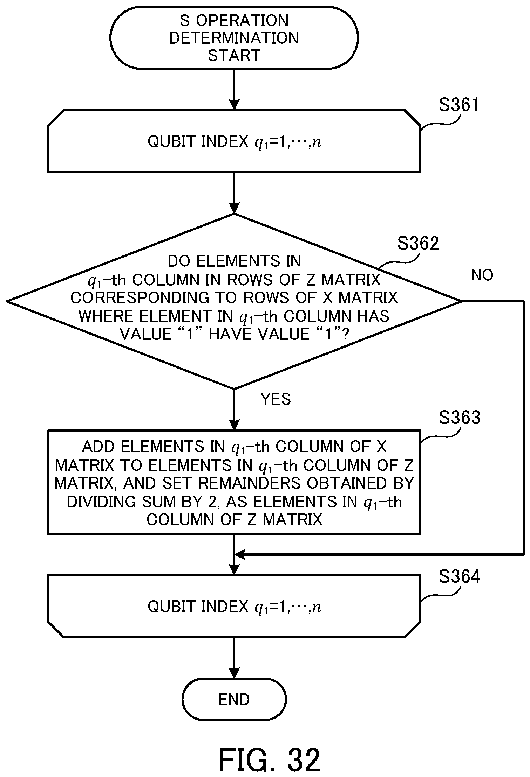

[Step S305] The quantum circuit creation unit 130 performs an S operation determination process. The details of the S operation determination process will be described later (see FIG. 32).

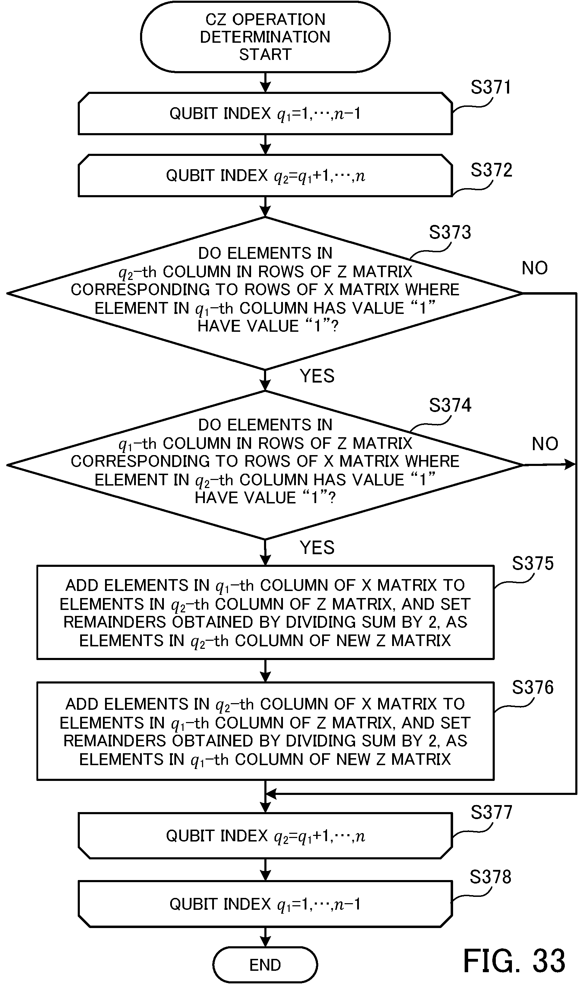

[Step S306] The quantum circuit creation unit 130 performs a CZ operation determination process. The details of the CZ operation determination process will be described later (see FIG. 33).

[Step S307] The quantum circuit creation unit 130 performs a matrix operation (H operation on all columns) of swapping the X matrix and the Z matrix. That is, the quantum circuit creation unit 130 determines to perform the H gate operation on all the qubits after the operation of the quantum gates corresponding to the matrix operations determined in steps S303 to S306.

Next, the H operation determination process will be described in detail.

FIG. 28 is a flowchart illustrating an example procedure for the H operation determination process. Hereinafter, the process illustrated in FIG. 28 will be described in order of step numbers.

[Step S311] The quantum circuit creation unit 130 executes steps S312 to S313 for each of the qubit indices "$q_1$ = 1, ..., n".

[Step S312] The quantum circuit creation unit 130 obtains the rank of a submatrix made up of the leftmost "$q_1$" columns of the X matrix. Then, the quantum circuit creation unit 130 determines whether the following condition is satisfied: the rank is equal to the smaller of "$q_1$" and the number of elements in the generator "G". If the condition is satisfied, the quantum circuit creation unit 130 advances the process to step S314. If the condition is not satisfied, the quantum circuit creation unit 130 advances the process to step S313.

[Step S313] The quantum circuit creation unit 130 performs a matrix operation of swapping the "$q_1$"-th column of the X matrix and the "$q_1$"-th column of the Z matrix. Thus, the quantum circuit creation unit 130 determines to perform the H gate operation on the qubit with the qubit index "$q_1$" in the basis transformation circuit.

[Step S314] When steps S312 to S313 are completed for all the qubit indices "$q_1$ = 1, ..., n", the quantum circuit creation unit 130 ends the H operation determination process.

When a qubit to which the H gate is applied first in the basis transformation circuit is determined by the H operation determination process, then, the CX operation determination process is performed.

FIG. 29 is a flowchart illustrating an example procedure for the CX operation determination process. Hereinafter, the process illustrated in FIG. 29 will be described step by step.

[Step S321] The quantum circuit creation unit 130 repeatedly executes steps S322 to S329 while at least one row among the rows of the X matrix has two or more elements with a value "1".

[Step S322] The quantum circuit creation unit 130 initializes a variable "I" to "1".

[Step S323] The quantum circuit creation unit 130 selects the column that has the "I"-th largest number of elements with the value "1" among the columns of the X matrix. The quantum circuit creation unit 130 sets the selected column as the "$q_2$"-th column.

[Step S324] The quantum circuit creation unit 130 identifies rows in the X matrix in which the element in the "$q_2$"-th column has the value "0". The quantum circuit creation unit 130 then determines whether there exists any column other than the "$q_2$"-th column, in which all of the identified rows have the value "0". If at least one column is detected, the quantum circuit creation unit 130 advances the process to step S328. If no column is detected, the quantum circuit creation unit 130 advances the process to step S325.

[Step S325] The quantum circuit creation unit 130 determines whether the variable "I" is equal to the number of columns in the X matrix. If the variable "I" is equal to the number of columns in the X matrix, the quantum circuit creation unit 130 advances the process to step S326. If the variable "I" is less than the number of columns in the X matrix, the quantum circuit creation unit 130 advances the process to step S327.

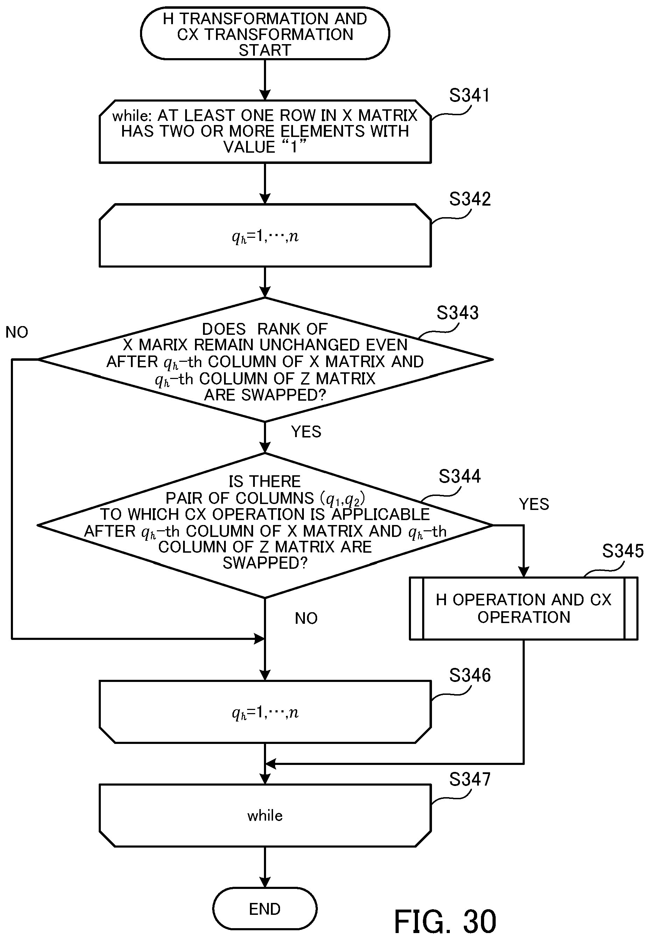

[Step S326] The quantum circuit creation unit 130 performs H transformation and CX transformation. The details of the H transformation and CX transformation process will be described later (see FIG. 30). Thereafter, the quantum circuit creation unit 130 ends the CX operation determination process.

[Step S327] The quantum circuit creation unit 130 increments the variable "I" by "one" (I ← I + 1), and advances the process to step S323.

[Step S328] The quantum circuit creation unit 130 selects a column that has the largest number of elements with the value "1" among the columns satisfying the condition in the determination of step S324. The quantum circuit creation unit 130 sets the selected column as the "$q_1$"-th column.

[Step S329] The quantum circuit creation unit 130 adds each element of the "$q_1$"-th column to the corresponding element of the "$q_2$"-th column, and updates each element of the "$q_2$"-th column to the remainder (mod 2) obtained by dividing the sum by 2. The quantum circuit creation unit 130 determines to perform the CX gate operation that uses the qubit corresponding to the "$q_1$"-th column as the control qubit and the qubit corresponding to the "$q_2$"-th column as the target qubit, according to this matrix operation.

[Step S330] If any row in the X matrix does not have two or more elements with the value "1", the quantum circuit creation unit 130 ends the CX operation determination process.

Next, the H transformation and CX transformation process will be described in detail.

FIG. 30 is a flowchart illustrating an example procedure for the H transformation and CX transformation process. Hereinafter, the process illustrated in FIG. 30 will be described in order of step numbers.

[Step S341] The quantum circuit creation unit 130 repeatedly executes steps S342 to S346 while at least one row among the rows of the X matrix has two or more elements with a value "1".

[Step S342] The quantum circuit creation unit 130 executes steps S343 to S345 for each of the qubit indices "$q_h$, = 1, ..., n".

[Step S343] The quantum circuit creation unit 130 determines whether the rank of the X matrix remains unchanged even after the "$q_h$"-th row of the X matrix and the "$q_h$"-th row of the Z matrix are swapped. If the rank remains unchanged, the quantum circuit creation unit 130 advances the process to step S344. If the rank changes, the quantum circuit creation unit 130 advances the process to step S346.

[Step S344] The quantum circuit creation unit 130 determines whether there is a pair of columns ($q_1$, $q_2$) to which

the CX operation is applicable in the case where the "$q_h$"-th column of the X matrix and the "$q_h$"-th column of the Z matrix are swapped. If a pair of columns is found to which the CX operation is applicable, the quantum circuit creation unit 130 advances the process to step S345. If no pair of columns is found to which the CX operation is applicable, the quantum circuit creation unit 130 advances the process to step S346.

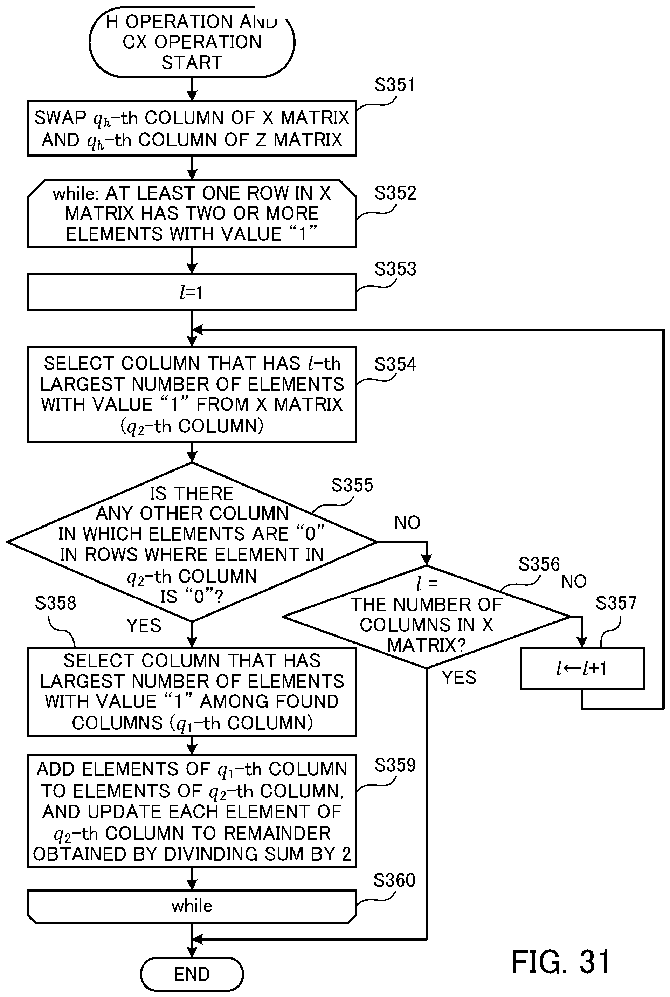

[Step S345] The quantum circuit creation unit 130 performs an H operation and a CX operation. The details of the H operation and the CX operation will be described later (see FIG. 31).

[Step S346] When steps S343 to S345 are completed for all the qubit indices "$q_h$ = 1, ..., n", the quantum circuit creation unit 130 advances the process to step S347.

[Step S347] If any row in the X matrix does not have two or more elements with the value "1", the quantum circuit creation unit 130 ends the H transformation and CX transformation process.

Next, the H operation and CX operation process will be described in detail.

FIG. 31 is a flowchart illustrating an example procedure for the H operation and CX operation process. Steps S352 to S360 of the process illustrated in FIG. 31 are the same as steps S321 to S325 and S327 to S330 of the CX operation determination process illustrated in FIG. 29. However, if the determination in step S356 yields "YES", then the H operation and CX operation process ends without executing the subsequent steps. Step S351, which is not executed in the CX operation determination process of FIG. 29, is as follows.

[Step S351] The quantum circuit creation unit 130 swaps the "$q_h$"-th column of the X matrix and the "$q_h$"-th column of the Z matrix. The quantum circuit creation unit 130 determines to perform the H gate operation on the qubit corresponding to the "$q_1$"-th column, according to this matrix operation. Thereafter, a column to be subjected to the CX operation is determined in step S352 and subsequent steps.

In this way, in the case where the H operation produces a column to which the CX operation is applicable, the CX operation is performed after the H operation.

After qubits to be subjected to the CX gate of the basis transformation circuit are determined through the CX operation determination process, the S operation determination process is performed next.

FIG. 32 is a flowchart illustrating an example procedure for the S operation determination process. Hereinafter, the process illustrated in FIG. 32 will be described in order of step numbers.

[Step S361] The quantum circuit creation unit 130 executes steps S362 to S363 for each of the qubit indices "$q_1$ = 1, ..., n".

[Step S362] The quantum circuit creation unit 130 identifies rows in the X matrix in which the element in the "$q_1$"-th column has the value "1". The quantum circuit creation unit 130 then determines whether the following condition is satisfied: in all the rows of the Z matrix that have the same observable indices as the identified rows, the element in the "$q_1$"-th column has the value "1". If the condition is satisfied, the quantum circuit creation unit 130 advances the process to step S363. If the condition is not satisfied, the quantum circuit creation unit 130 advances the process to step S364.

[Step S363] The quantum circuit creation unit 130 adds each element in the "$q_1$" column of the X matrix to the corresponding element in the "$q_1$"-th column of the Z matrix, and sets the remainders obtained by dividing each sum by 2, as the elements in the "$q_1$"-th column of a new Z matrix. The quantum circuit creation unit 130 determines to perform the S gate operation on the qubit with the qubit index "$q_1$", according to this matrix operation.

[Step S364] When steps S362 to S363 are completed for all the qubit indices "$q_1$ = 1, ..., n", the quantum circuit creation unit 130 ends the S operation determination process.

When the S operation determination process ends, the CZ operation determination process is performed.

FIG. 33 is a flowchart illustrating an example procedure for the CZ operation determination process. Hereinafter, the process illustrated in FIG. 33 will be described step by step.

[Step S371] The quantum circuit creation unit 130 executes steps S372 to S377 for each of the qubit indices "$q_1$ = 1, ..., n - 1".

[Step S372] The quantum circuit creation unit 130 executes steps S373 to S376 for each of the qubit indices "$q_2$ = $q_1$ + 1, ..., n" with a value greater than "$q_1$".

[Step S373] The quantum circuit creation unit 130 identifies rows in the X matrix in which the element in the "$q_1$"-th column has the value "1". The quantum circuit creation unit 130 then determines whether the following condition is satisfied: in all the rows of the Z matrix that have the same observable indices as the identified rows, the element in the "$q_2$"-th column has the value "1". If the condition is satisfied, the quantum circuit creation unit 130 advances the process to step S374. If the condition is not satisfied, the quantum circuit creation unit 130 advances the process to step S377.

[Step S374] The quantum circuit creation unit 130 identifies rows in the X matrix in which the element in the "$q_2$"-th column has the value "1". The quantum circuit creation unit 130 then determines whether the following condition is satisfied: in all the rows of the Z matrix that have the same observable indices as the identified rows, the element in the "$q_1$"-th column has the value "1". If the condition is satisfied, the quantum circuit creation unit 130 advances the process to step S375. If the condition is not satisfied, the quantum circuit creation unit 130 advances the process to step S377.

[Step S375] The quantum circuit creation unit 130 adds each element in the "$q_1$"-th column of the X matrix to the corresponding element in the "$q_2$"-th column of the Z matrix, and sets the remainders obtained by dividing each sum by 2, as the elements in the "$q_2$"-th column of a new Z matrix.

[Step S376] The quantum circuit creation unit 130 adds each element in the "$q_2$"-th column of the X matrix to the corresponding element in the "$q_1$"-th column of the Z matrix, and sets the remainders obtained by dividing each sum by 2, as the elements in the "$q_1$"-th column of the new Z matrix.

The quantum circuit creation unit 130 determines to perform the CZ gate operation on the qubit indices "$q_1$" and "$q_2$", according to the matrix operations of steps S375 and S376.

[Step S377] When steps S373 to S376 are completed for all the qubit indices "$q_2 = q_1 + 1$, ..., n" with a value greater than "$q_1$", the quantum circuit creation unit 130 advances the process to step S378.

[Step S378] When steps S372 to S377 are completed for all the qubit indices "$q_1 = 1$, ..., n - 1", the quantum circuit creation unit 130 ends the CZ operation determination process.

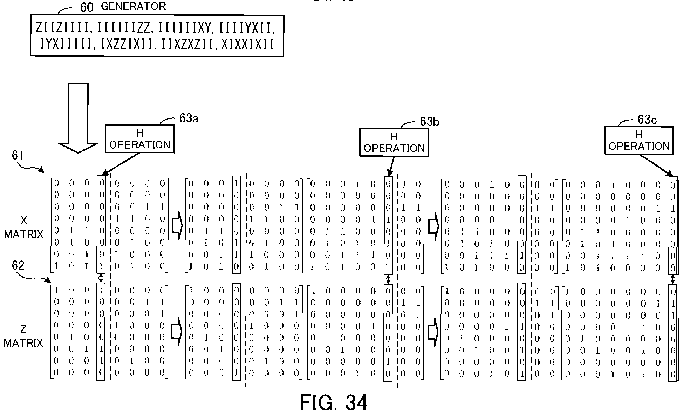

As described above, an appropriate basis transformation operation is determined, and a basis transformation circuit corresponding to the determined basis transformation operation is created. Next, an example of a basis transformation operation will be described with reference to FIGS. 34 to 38.

FIG. 34 is a diagram (1/5) illustrating an example of a basis transformation operation. For example, it is assumed that 8-qubit observables (n = 8) are to be measured. A generated generator 60 is "G = {ZIIZIIII, IIIIIIZZ, IIIIIIXY, IIIIYXII, IYXIIIII, IXZZIXII, IIXZXZII, XIXXIXII}". The number of elements in the generator 60 is "8".

These elements in the generator 60 are represented using an X matrix 61 and a Z matrix 62. Three H operations 63a to 63c are performed on the X matrix 61 and the Z matrix 62 through the H operation determination process based on the X matrix 61 and the Z matrix 62.

The first H operation 63a swaps the fourth column of the X matrix 61 and the fourth column of the Z matrix 62. The second H operation 63b swaps the sixth column of the X matrix 61 and the sixth column of the Z matrix 62. The third H operation 63c swaps the eighth column of the X matrix 61 and the eighth column of the Z matrix 62.

On the basis of these H operations, an H gate is arranged on each of the qubits with the qubit indices "4, 6, 8" in the basis transformation circuit.

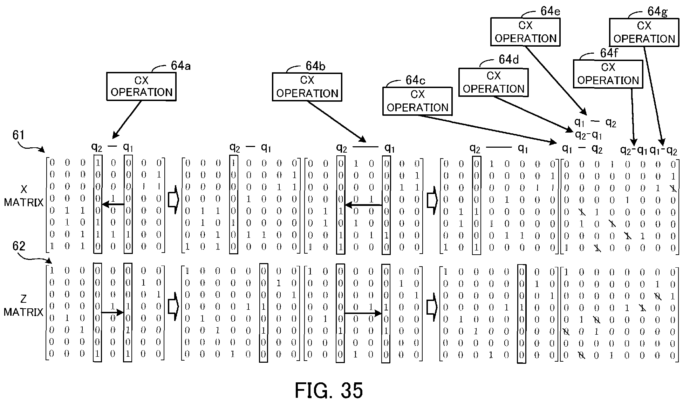

FIG. 35 is a diagram (2/5) illustrating the example of the basis transformation operation. Seven CX operations 64a to 64g are performed on the X matrix 61 and the Z matrix 62 through the CX operation determination process based on the X matrix 61 and the Z matrix 62 after the H operations.

In the first CX operation 64a, the sixth column is "$q_1$" and the fourth column is "$q_2$", and the fourth column of the X matrix 61 and the sixth column of the Z matrix 62 are updated. In the second CX operation 64b, the sixth column is "$q_1$" and the third column is "$q_2$", and the third column of the X matrix 61 and the sixth column of the Z matrix 62 are updated. In the third CX operation 64c, the first column is "$q_1$" and the third column is "$q_2$", and the third column of the X matrix 61 and the first column of the Z matrix 62 are updated. In the fourth CX operation 64d, the third column is "$q_1$" and the second column is "$q_2$", and the second column of the X matrix 61 and the third column of the Z matrix 62 are updated. In the fifth CX operation 64e, the second column is "$q_1$" and the fourth column is "$q_2$", and the fourth column of the X matrix 61 and the second column of the Z matrix 62 are updated. In the sixth CX operation 64f, the sixth column is "$q_1$" and the fifth column is "$q_2$", and the fifth column of the X matrix 61 and the sixth column of the Z matrix 62 are updated. In the seventh CX operation 64g, the seventh column is "qi" and the eighth column is "$q_2$", and the eighth column of the X matrix 61 and the seventh column of the Z matrix 62 are updated.

In FIG. 35, a slash is drawn over each of the elements whose values are changed by the CX operations 64c to 64g. "0" with a slash is changed to "1", and "1" with a slash is changed to "0".

On the basis of the CX operation 64a, a CX gate in which the qubit with the qubit index "6" is set as the control qubit and the qubit with the qubit index "4" is set as the target qubit is arranged in the basis transformation circuit. On the basis of the CX operation 64b, a CX gate in which the qubit with the qubit index "6" is set as the control qubit and the qubit with the qubit index "3" is set as the target qubit is arranged in the basis transformation circuit. On the basis of the CX operation 64c, a CX gate in which the qubit with the qubit index "1" is set as the control qubit and the qubit with the qubit index "3" is set as the target qubit is arranged in the basis transformation circuit. On the basis of the CX operation 64d, a CX gate in which the qubit with the qubit index "3" is set as the control qubit and the qubit with the qubit index "2" is set as the target qubit is arranged in the basis transformation circuit. On the basis of the CX operation 64e, a CX gate in which the qubit with the qubit index "2" is set as the control qubit and the qubit with the qubit index "4" is set as the target qubit is arranged in the basis transformation circuit. On the basis of the CX operation 64f, a CX gate in which the qubit with the qubit index "6" is set as the control qubit and the qubit with the qubit index "5" is set as the target qubit is arranged in the basis transformation circuit. On the basis of the CX operation 64g, a CX gate in which the qubit with the qubit index "7" is set as the control qubit and the qubit with the qubit index "8" is set as the target qubit is arranged in the basis transformation circuit.

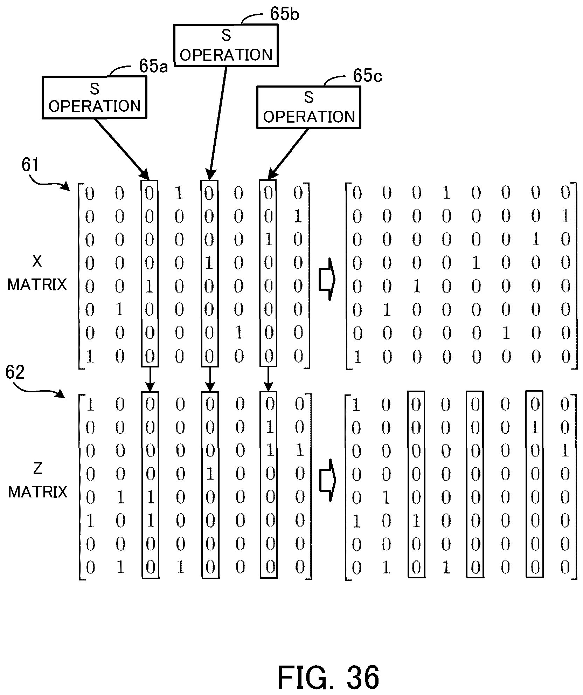

FIG. 36 is a diagram (3/5) illustrating the example of the basis transformation operation. Three S operations 65a to 65c are performed on the X matrix 61 and the Z matrix 62 through the S operation determination process based on the X matrix 61 and the Z matrix 62 after the CX operations.

In the first S operation 65a, the third column of the Z matrix 62 is updated using the third column of the X matrix 61. In the second S operation 65b, the fifth column of the Z matrix 62 is updated using the fifth column of the X matrix 61. In the third S operation 65c, the seventh column of the Z matrix 62 is updated using the seventh column of the X matrix 61.

On the basis of these S operations, an S gate is arranged on each of the qubits with the qubit indices "3, 5, 7" in the basis transformation circuit.

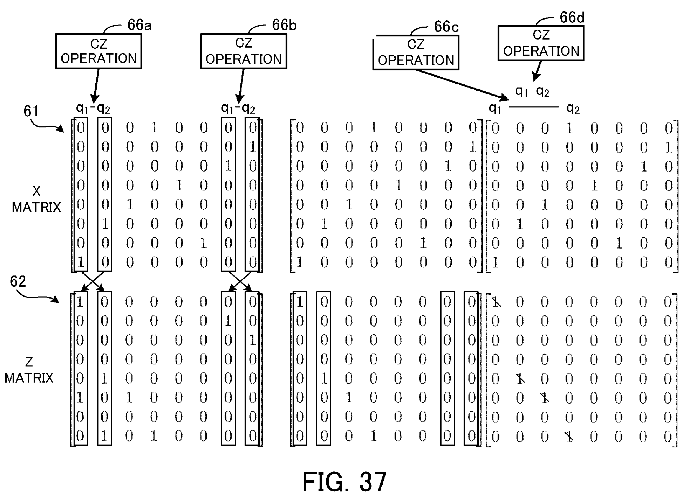

FIG. 37 is a diagram (4/5) illustrating the example of the basis transformation operation. Four CZ operations 66a to 66d are performed on the X matrix 61 and the Z matrix 62 through the CZ operation determination process based on the X matrix 61 and the Z matrix 62 after the S operations.

In the first CZ operation 66a, the first column is "$q_1$" and the second column is "$q_2$", and the first and second columns of the Z matrix 62 are updated. In the second CZ operation 66b, the seventh column is "$q_1$" and the eighth column is "$q_2$", and the seventh and eighth columns of the Z matrix 62 are updated. In the third CZ operation 66c, the first column is "$q_1$" and the fourth column is "$q_2$", and the first and fourth columns of the Z matrix 62 are updated. In the fourth CZ operation 66d, the second column is "$q_1$" and the third column is "$q_2$", and the second and third columns of the Z matrix 62 are updated.

In FIG. 37, a slash is drawn over each of the elements whose values are changed by the CZ operations 66c and 66d. "0" with a slash is changed to "1", and "1" with a slash is changed to "0".

On the basis of the CZ operation 66a, a CZ gate that operates the qubits with the qubit indices "1, 2" is arranged in the basis transformation circuit. On the basis of the CZ operation 66b, a CZ gate that operates the qubits with the qubit indices "7, 8" is arranged in the basis transformation circuit. On the basis of the CZ operation 66c, a CZ gate that operates the qubits with the qubit indices "1, 4" is arranged in the basis transformation circuit. On the basis of the CZ operation 66d, a CZ gate that operates the qubits with the qubit indices "2, 3" is arranged in the basis transformation circuit.

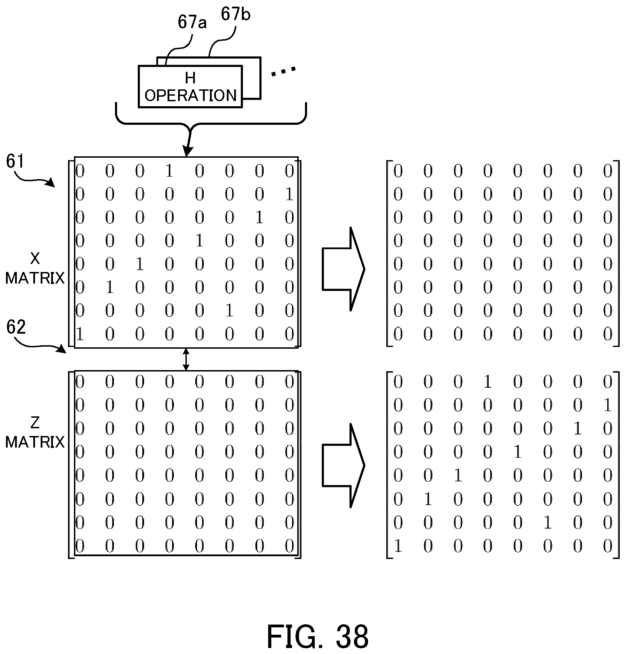

FIG. 38 is a diagram (5/5) illustrating the example of the basis transformation operation. H operations 67a, 67b, and ... are performed on the respective columns of the X matrix 61 and the Z matrix 62, through the matrix swapping process based on the X matrix 61 and the Z matrix 62 after the CZ operations. On the basis of the H operations 67a, 67b, and ..., H gates are arranged on all qubits in the basis transformation circuit.

As described above, the procedure for the basis transformation operation is determined, and the basis transformation circuit is generated according to the determined procedure for the basis transformation operation.

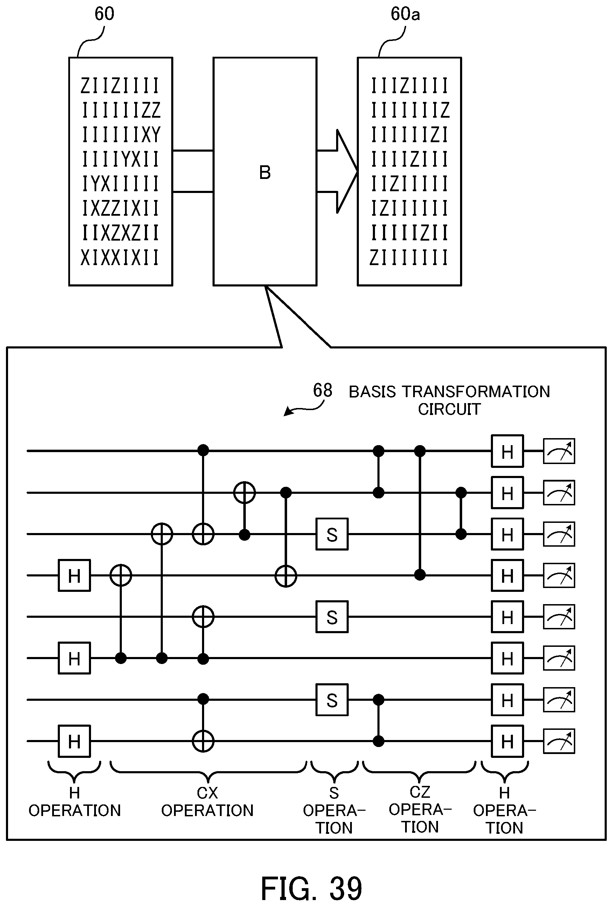

FIG. 39 illustrates an example of a generated basis transformation circuit. A basis transformation circuit 68 includes quantum gates corresponding to the basis transformation operations illustrated in FIGS. 34 to 38. By executing the basis transformation circuit, the expectation values of the observables included in the generator 60 are measured as the expectation values of the observables included in the observable group 60a.

The Pauli strings of the observables included in in the observable group 60a each include one "Z" and seven "I"s. That is, for each observable in the observable group 60a, its expectation value is obtained from the measurement result of the qubit corresponding to the qubit index of "Z".

In the examples illustrated in FIGS. 34 to 38, the H transformation and CX transformation process is not performed in the course of the CX operation determination process. The following describes how to determine a basis transformation operation in the case where the H transformation and CX transformation process is performed.

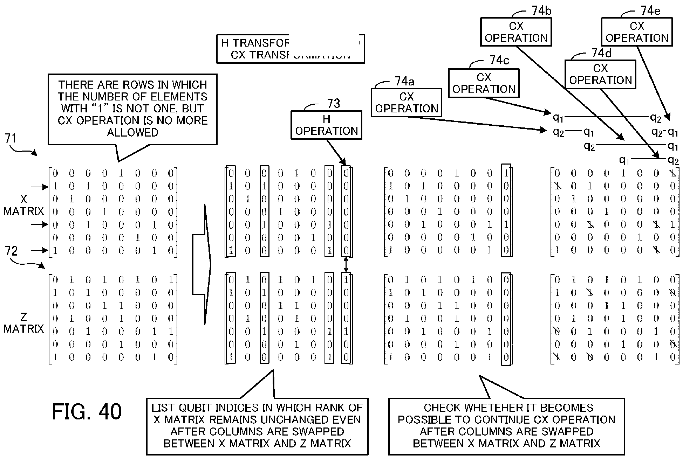

FIG. 40 illustrates an example of determining a basis transformation operation in the H transformation and CX transformation process. For example, it is assumed that the states of an X matrix 71 and a Z matrix 72 are reached in the course of the CX operation determination process. The CX operation determination process is a process of performing matrix transformation so that each row of the X matrix 71 has only one element with the value "1". The X matrix 71 has three rows in which the number of elements with the value "1" is not one. However, the CX operation is no more allowed to be performed on the X matrix 71. In this case, the H transformation and CX transformation process is performed.

In the H transformation and CX transformation process, the qubit indices in which the rank of the X matrix remain unchanged even after columns are swapped between the X matrix 71 and the Z matrix 72 are listed. In the example of FIG. 40, the qubit indices "1, 3, 7, 8" are listed. Then, it is checked whether it becomes possible to continue the CX operation after the columns of the X matrix 71 and the Z matrix 72 are swapped for the listed qubit indices. Then, an H operation 73 that swaps the columns of the X matrix 71 and the Z matrix 72 is performed on each qubit index for which it is determined that it becomes possible to continue the CX operation after the column swapping. In the example of FIG. 40, the columns of the X matrix 71 and the Z matrix 72 are swapped for the qubit index "8".

This makes it possible to further perform the CX operation. In the example of FIG. 40, five CX operations 74a to 74e are performed. In FIG. 40, a slash is drawn over each of the elements whose values are changed by the CX operations 74a to 74e. "0" with a slash is changed to "1", and "1" with a slash is changed to "0". As a result, each row of the X matrix 71 has only one element with the value "1".

The above-described procedure for creating a basis transformation circuit includes at least the following three improvement measures in order to reduce the number of two-qubit gates.

The first improvement measure is a process in which an appropriate index value is calculated for each observable in a set "Q" of basis transformation observables, and a generator "G" is generated based on the calculated index values. The generator "G" here is a set of observables whose expectation values are each computed based on the measurement of a single qubit.

The second improvement is a process in which observables whose expectation values are each computed based on the measurement of a single qubit are selected not only from the elements in the partition "P" but also from a set "Q" of observables including the elements of the partition "P" and also including more elements. The set "Q" of observables includes the elements of the partition "P" and observables that are each represented by the product of those elements.

The third improvement measure is a process in which, if the number of elements in the set "Q" generated from the elements of the partition "P" is less than "$2^n - 1$", the set "Q" is updated using a set "P'" including additional observables that are commutative with the elements of the partition "P".

Hereinafter, the relationships between whether the above three improvement measures are applied and the number of two-qubit gates in a generated basis transformation circuit will be specifically described. In the case where the first improvement measure is not applied, for example, observables randomly selected from the partition "P" are elements of the generator "G". In the case where the second improvement is not applied, observables whose expectation values are each computed based on the measurement of a single qubit are selected only from the elements of the partition "P". In the case where the third improvement measure is not applied, no element is added to the set "Q" even if the number of elements in the set "Q" generated from the elements of the partition "P" is less than "$2^n - 1$".

Hereinafter, a case will be considered in which the ground state energy of LiH is computed using a quantum computer on the basis of qubit mapping using Jordan-Wigner transformation, with the computational basis set STO-3G and 12 active spin orbitals. In this case, the number of observables whose expectation values need to be measured is 630, and each observable is represented by a Pauli string acting on 12 qubits. The number of two-qubit gates in a basis transformation circuit for enabling measurement of these observables will be described.

First, based on these observables, partitions are generated, which each include simultaneously measurable observables.

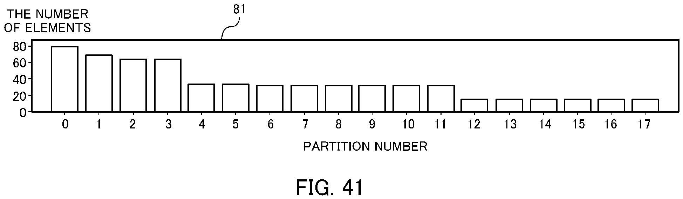

FIG. 41 illustrates an example of a partitioning result. A graph 81 represents the number of elements for each partition generated by partitioning. The horizontal axis of the graph 81 represents the partition number, and the vertical axis represents the number of elements. In the example of FIG. 41, 18 partitions are generated.

The following describes, for these partitions, the number of two-qubit gate operations needed in a basis transformation circuit for the following cases: "no improvement measure", "first improvement measure", "first and second improvement measures", and "first, second, and third improvement measures".

In the case where the "no improvement measure" is applied, observables "$G_1, G_2, ...$" are randomly selected from the partition "P", and a generator "G" is generated.

In the case where the "first improvement measure" is applied, observables "$G_1, G_2, ...$" are selected from the partition "P" on the basis of the magnitude of the index value "$v_i$", and a generator "G" is generated.

In the case where the "first and second improvement measures" are applied, a set "Q" of observables that are each represented by the product of elements in the partition "P" is generated on the basis of the elements in the partition "P". Then, observables "$G_1, G_2, ...$" are selected from the set "Q" on the basis of the magnitude of the index value "$v_i$", and a generator "G" including the selected observables is generated.

In the case where the "first, second, and third improvement measures" are applied and the number of observables in the set "Q" is less than $2^n - 1$, an observable group "Q'" including $2^n - 1$ elements is generated from the set "Q". Then, observables "$G_1, G_2, ...$" are selected from the observable group "Q'" on the basis of the magnitude of the index value "$v_i$", and a generator "G" including the selected observables is generated.

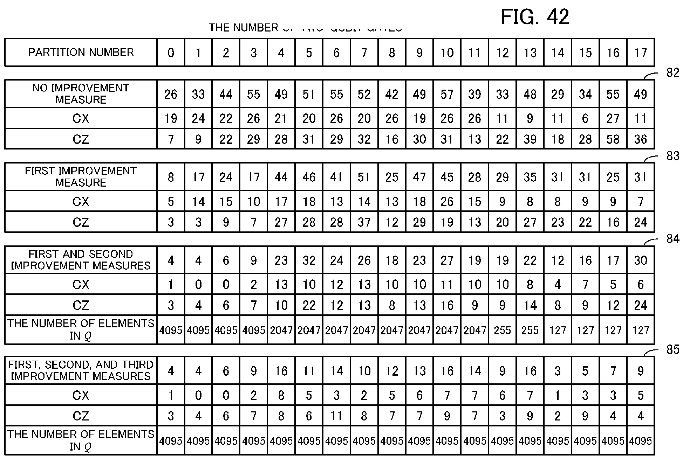

FIG. 42 illustrates an example of the number of two-qubit gates in generated basis transformation circuits. A table 82 represents the number of two-qubit gates included in a basis transformation circuit for each partition in the case of "no improvement measure". A table 83 represents the number of two-qubit gates included in a basis transformation circuit for each partition in the case where the "first improvement measure" is applied. A table 84 represents the number of two-qubit gates included in a basis transformation circuit for each partition in the case where the "first and second improvement measures" are applied. A table 85 represents the number of two-qubit gates included in a basis transformation circuit for each partition in the case where the "first, second, and third improvement measures" are applied.

The tables 82 to 85 indicate the number of CX gates and the number of CZ gates, below the number of two-qubit gates for each partition. In addition, the tables 84 and 85 further indicate the number of elements in the set "Q" for each partition.

As is seen from a comparison of the tables 82 to 85, the application of the "first improvement measure" results in fewer two-qubit gates than that of "no improvement measure". Further, the application of the "first and second improvement measures" results in fewer two-qubit gates than that of the "first improvement measure". Further, the application of the "first, second, and third improvement measures" results in fewer two-qubit gates than that of the "first and second improvement measures".

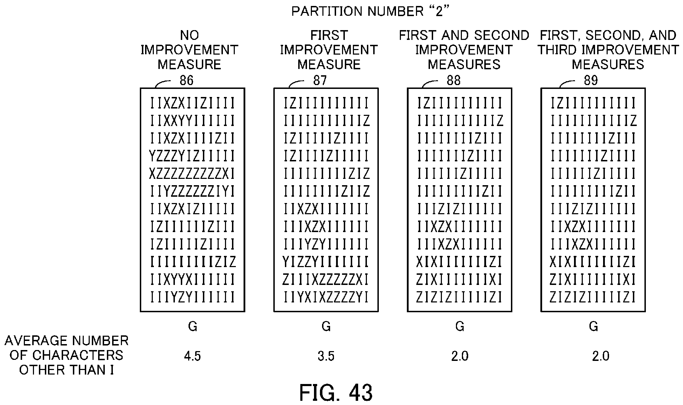

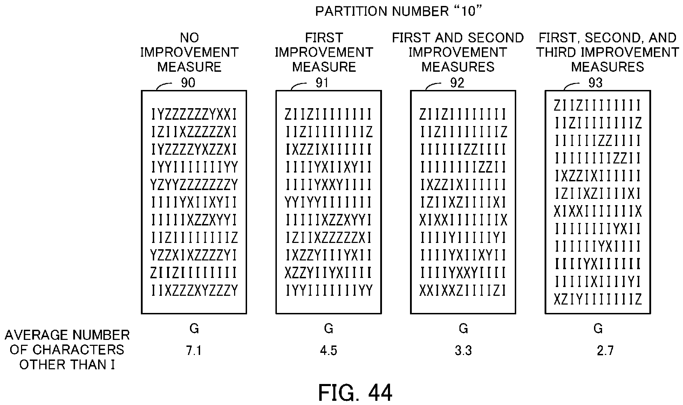

By applying various improvement measures in this manner, it is possible to reduce the number of two-qubit gates included in a basis transformation circuit. Hereinafter, a comparison of the generators "G" corresponding to the application of the respective improvement measures will be described with reference to FIGS. 43 and 44.

FIG. 43 illustrates an example of generators for a partition with partition number "2". An observable group 86 indicates a generator "G" in the case where the "no improvement measure" is applied. The average number of characters other than "I" in the observables of the observable group 86 is "4.5".

An observable group 87 indicates a generator "G" in the case where the "first improvement measure" is applied. The average number of characters other than "I" in the observables of the observable group 87 is "3.5".

An observable group 88 indicates a generator "G" in the case where the "first and second improvement measures" are applied. The average number of characters other than "I" in the observables of the observable group 88 is "2.0".

An observable group 89 indicates a generator "G" in the case where the "first, second, and third improvement measures" are applied. The average number of characters other than "I" in the observables of the observable group 89 is **"2.0".**

FIG. 44 illustrates an example of generators for a partition with partition number "10". An observable group 90 indicates a generator "G" in the case where the "no improvement measure" is applied. The average number of characters other than "I" in the observables of the observable group 90 is "7.1".

An observable group 91 indicates a generator "G" in the case where the "first improvement measure" is applied. The average number of characters other than "I" in the observables of the observable group 91 is "4.5".

An observable group 92 indicates a generator "G" in the case where the "first and second improvement measures" are applied. The average number of characters other than "I" in the observables of the observable group 92 is "3.3".

An observable group 93 indicates a generator "G" in the case where the "first, second, and third improvement measures" are applied. The average number of characters other than "I" in the observables of the observable group 93 is "2.7".

As illustrated in FIGS. 43 and 44, the application of more improvement measures reduces the number of characters other than I in the observables included in a generator "G". A smaller number of characters other than I in the observables included in a generator "G" increases the likelihood that the number of two-qubit gates in a basis transformation circuit is reduced.

In the above example, the weighting coefficients in the index value "$v_i = c_x n_{ix} + c_y n_{iy} + c_z n_{iz}$" are set to "$c_x = c_z = 1$, $c_y = 2$". Note, however, that the optimal values of the weighting coefficients depend on the Pauli strings of the observables included in a partition.

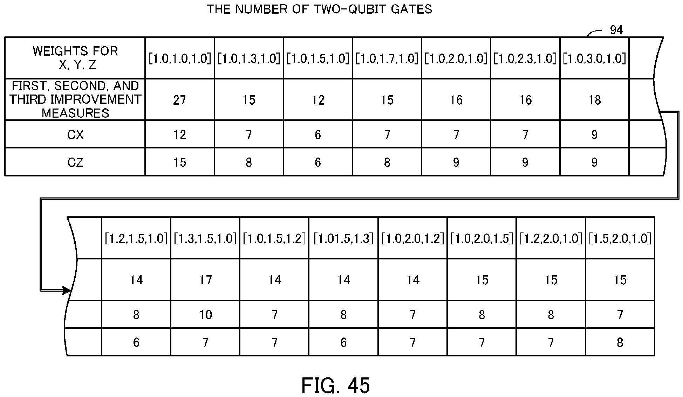

FIG. 45 illustrates an example of the number of two-qubit gates depending on weights given to characters used for calculation of an index value. A table 94 represents the number of two-qubit gates for each combination of weights for the characters in the case where the "first + second + third improvement measures" are applied. The weights for X, Y, and Z are represented as an array of numerical values $[c_x, c_y, c_z]$. The number of two-qubit gates included in a basis transformation circuit, and the number of CX gates and the number of CZ gates among them are indicated below the combination of the weights for the characters.

In the example of the table 94, the minimum number of two-qubit gates, "12", is achieved in the case of $[c_x, c_y, c_z] = [1.0, 1.5, 1.0]$. In this way, by giving a higher weight to Y than to X or Z, it is possible to reduce the number of two-qubit gates.

Although the embodiments have been described above, the configuration of each unit described in the embodiments may be replaced with another unit having the same function. In addition, any other components or processes may be added. Furthermore, any two or more configurations (features) of the above-described embodiments may be combined.

According to one aspect, it is possible to reduce the number of two-qubit gates in a basis transformation circuit.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

**Claims**

**1.** A computer program that causes a computer to perform a process comprising:

calculating, for each observable of a plurality of simultaneously measurable observables included in an observable group (2), an index value based on a number of characters other than I included in a Pauli string representing said each observable;

selecting a predetermined number of observables (3a - 3d) from the observable group (2), based on the index value; and

creating a basis transformation circuit (9) that transforms an expectation value of each of the predetermined number of selected observables (3a - 3d) into a measurement result of a single qubit, the expectation value being included in an execution result of a quantum circuit (8), the quantum circuit being configured to perform quantum computation based on a problem to be solved.

2. The computer program according to claim 1, wherein

the calculating of the index value includes calculating the index value such that, as the number of characters other than I in the Pauli string representing said each observable decreases, a selection priority of said each observable increases; and

the selecting of the predetermined number of observables (3a - 3d) includes selecting the predetermined number of observables (3a - 3d) in descending order of the selection priority based on the index value.

3. The computer program according to claim 1 or 2, wherein the calculating of the index value includes calculating the index value as a linear sum of a number of X' s, a number of Y' s, and a number of Z' s in the Pauli string.

4. The computer program according to claim 3, wherein the calculating of the index value includes setting a weighting coefficient for the number of Y's in the linear sum to higher than weighting coefficients for the number of X's and the number of Z's, and then calculating the index value.

5. The computer program according to any of the preceding claims, wherein the calculating of the index value includes including, in the observable group (2), a plurality of simultaneously measurable observables (6a - 6c) to be measured among a plurality of observables to be measured for computing a solution to the problem, and an observable (7a - 7d) represented by a product of two or more of the plurality of simultaneously measurable observables (6a - 6c) to be measured.

6. The computer program according to any of the preceding claims, wherein the calculating of the index value includes

generating an additional observable (2a) which commutes with each of a plurality of simultaneously measurable observables (6a - 6c) to be measured among a plurality of observables to be measured for computing a solution to the problem and whose Pauli string includes two or less characters other than I, and

including, in the observable group (2), the plurality of simultaneously measurable observables (6a - 6c) to be measured, the additional observable (2a), and an observable (2b-1, 2b-2, ...) represented by a product of two or more of the plurality of simultaneously measurable observables (6) to be measured and the additional observable (2a).

7. A quantum computation support method executed by a computer, the quantum computation support method comprising:

calculating, for each observable of a plurality of simultaneously measurable observables included in an observable group (2), an index value based on a number of characters other than I included in a Pauli string representing said each observable;

selecting a predetermined number of observables (3a - 3d) from the observable group (2), based on the index value; and

creating a basis transformation circuit (9) that transforms an expectation value of each of the predetermined number of selected observables (3a - 3d) into a measurement result of a single qubit, the expectation value being included in an execution result of a quantum circuit (8), the quantum circuit being configured to perform quantum computation based on a problem to be solved.

8. An information processing apparatus comprising:
processing means (12) for:

calculating, for each observable of a plurality of simultaneously measurable observables included in an observable group (2), an index value based on a number of characters other than I included in a Pauli string representing said each observable;

selecting a predetermined number of observables (3a - 3d) from the observable group (2), based on the index value; and

creating a basis transformation circuit (9) that transforms an expectation value of each of the predetermined number of selected observables (3a - 3d) into a measurement result of a single qubit, the expectation value being included in an execution result of a quantum circuit (8), the quantum circuit being configured to perform quantum computation based on a problem to be solved.

4 OBSERVABLE GROUP

5a
5b } PARTITION
5c

6b
6a
6c

7a
7b
7c
7d

2 OBSERVABLE GROUP

2a
2b-1
2b-2
⋮

INCREASE THE NUMBER OF
OBSREVABLES TO $2^n-1$
(n: THE NUMBER OF QUBITS)

INDEX
VALUE: 2

IIZZ  IZIZ
ZZII
IZZI  ZIIZ
ZIZI

INDEX
VALUE: 4
XXXX
ZZZZ

INDEX
VALUE: 6

XYYX  YYXX
XYXY    YXYX
XXYY YXXY

INDEX
VALUE: 8

YYYY

INDEX VALUE = THE NUMBER OF X's +
THE NUMBER OF Z's +
2 × THE NUMBER OF Y's

SELECT

3a          3b
3c          3d
XXXX    IZIZ

IIZZ    ZIIZ

CREATE BASIS
TRANSFORMATION CIRCUIT

8
QUANTUM
CIRCUIT

Z I I X
I I Z X
I Z I X
Z Z Z X

9
BASIS
TRANSFOR-
MATION
CIRCUIT

ZIII=XXXX
IZII=IZIZ
IIZI=IIZZ
IIIZ=ZIIZ

COMPUTE
EXPECTATION
VALUES OF
OTHER
OBSERVABLES

10

INFORMATION
PROCESSING APPARATUS

11
STORAGE
UNIT

12
PROCESSING
UNIT

1
QUANTUM
COMPUTER

FIG. 1

QUANTUM
COMPUTING SYSTEM

30

200

QUANTUM
COMPUTER

100 CLASSICAL
COMPUTER

20

NETWORK

29 TERMINAL

FIG. 2

**21 MONITOR**

**100 CLASSICAL COMPUTER**

**104**

**101**

**PROCESSOR**

**GPU**

**22 KEYBOARD**

**102**

**MEMORY**

**105**

**INPUT INTERFACE**

**23 MOUSE**

**103**

**STORAGE DEVICE**

**106**

**OPTICAL DRIVE DEVICE**

**24 OPTICAL DISC**

**108**

**107**

**25 MEMORY DEVICE**

**NETWORK INTERFACE**

**DEVICE CONNECTION INTERFACE**

**MEMORY READER/WRITER 26**

**100a BUS**

**109**

**COMMUNI-CATION INTERFACE**

**20**

**NETWORK**

**200**

**QUANTUM COMPUTER**

**27 MEMORY CARD**

# FIG. 3

31 COMMUTATION/ANTI-COMMUTATION
CORRESPONDENCE TABLE

|   | $I$ | $X$ | $Y$ | $Z$ |
|---|---|---|---|---|
| $I$ | + | + | + | + |
| $X$ | + | + | − | − |
| $Y$ | + | − | + | − |
| $Z$ | + | − | − | + |

+ : COMMUTATIVE
− : ANTI-COMMUTATIVE

COMPARE
$I_0 Y_1 X_2$ AND $Z_0 Z_1 Z_2$

$I_0 Z_0 = Z_0 I_0$    $Y_1 Z_1 = -Z_1 Y_1$    $X_2 Z_2 = -Z_2 X_2$

$(I_0 Y_1 X_2)(Z_0 Z_1 Z_2) = (Z_0 Z_1 Z_2)(I_0 Y_1 X_2)$

COMMUTATIVE

# FIG. 4

FIG. 5

44 PARTITION

$$\langle\psi|P|\psi\rangle = \langle\psi|B^\dagger P'B|\psi\rangle = \langle\psi'|P'|\psi'\rangle$$
$$\text{where } |\psi'\rangle = B\,|\psi\rangle$$

$$\mathcal{B}(P) = BPB^\dagger$$

FIG. 6

FIG. 7

FIG. 8

FIG. 9

FIG. 10

FIG. 11

$$\mathcal{P} = \{P_1, P_2, P_3, ...\}$$

GENERATE SET OF OBSERVABLES EACH
REPRESENTED BY THE PRODUCT OF ELEMENTS

$$\mathcal{Q} = \{Q_1, Q_2, Q_3, ...\}$$

SELECT ELEMENT $Q_i$ WITH SMALL INDEX VALUE $v_i$

$$G = \{G_1, G_2, G_3, ...\}$$

$G_1$
$G_2$
$\vdots$
$G_n$

BASIS
TRANSFORMATION
OPERATION
B

$G'_1 = ZII...I$
$G'_2 = IZI...I$
$\vdots$
$G'_n = III...Z$

38

BASIS
TRANSFORMATION
CIRUIT

FIG. 12

$\mathcal{G} = \{ZIIZ\}$

XXXX    IIZZ    YXYX    XYYX

XYXY    IZIZ      IZZI    ZZII

XXYY    Z̶I̶I̶Z̶      YYYY

YXXY      ZIZI

     YYXX    ZZZZ

$\mathcal{G} = \{ZIIZ, IZIZ\}$

XXXX    IIZZ    YXYX    XYYX

XYXY    I̶Z̶I̶Z̶      IZZI    Z̶Z̶I̶I̶

XXYY    Z̶I̶I̶Z̶      YYYY

YXXY      ZIZI

     YYXX    ZZZZ

$\mathcal{G} = \{ZIIZ, IZIZ, IIZZ\}$

XXXX    I̶I̶Z̶Z̶    YXYX    XYYX

XYXY    I̶Z̶I̶Z̶      I̶Z̶Z̶I̶    Z̶Z̶I̶I̶

XXYY    Z̶I̶I̶Z̶      YYYY

YXXY      Z̶I̶Z̶I̶

     YYXX    Z̶Z̶Z̶Z̶

$v_i = 4$
(MINIMUM VALUE)

$\mathcal{G} = \{ZIIZ, IZIZ, IIZZ, XXXX\}$

X̶X̶X̶X̶    I̶I̶Z̶Z̶    Y̶X̶Y̶X̶    X̶Y̶Y̶X̶

X̶Y̶X̶Y̶    I̶Z̶I̶Z̶      I̶Z̶Z̶I̶    Z̶Z̶I̶I̶

X̶X̶Y̶Y̶    Z̶I̶I̶Z̶      Y̶Y̶Y̶Y̶

Y̶X̶X̶Y̶      Z̶I̶Z̶I̶

     Y̶Y̶X̶X̶    Z̶Z̶Z̶Z̶

$\mathcal{P}$

XXXX      XXYY

XYXY      YXXY

$\mathcal{Q}$

XXXX    IIZZ   YXYX    XYYX

XYXY    IZIZ      ZZII

     IZZI

XXYY      YYYY

YXXY   ZIIZ

     ZIZI    ZZZZ

     YYXX

$v_i = 2$
(MINIMUM VALUE)

# FIG. 13

$G = \{XXXX, IZIZ, IIZZ, ZIIZ\}$

**FIG. 14**

GENERATE BINARY MATRICES REPRESENTING GROUP OF OBSERVABLES

QUBIT INDEX

X MATRIX
$\begin{bmatrix} 1 & 1 & 1 & 1 \\ 0 & 0 & 0 & 0 \\ 0 & 0 & 0 & 0 \\ 0 & 0 & 0 & 0 \end{bmatrix}$ 51 OBSERVABLE INDEX

Z MATRIX
$\begin{bmatrix} 0 & 0 & 0 & 0 \\ 0 & 1 & 0 & 1 \\ 0 & 0 & 1 & 1 \\ 1 & 0 & 0 & 1 \end{bmatrix}$ 52 OBSERVABLE INDEX

BASIS TRANSFORMATION PROCEDURE — 53

$\begin{bmatrix} 1 & 1 & 1 & 1 \\ 0 & 0 & 0 & 0 \\ 0 & 0 & 0 & 0 \\ 0 & 0 & 0 & 0 \end{bmatrix}$

$\begin{bmatrix} 0 & 0 & 0 & 0 \\ 0 & 1 & 0 & 1 \\ 0 & 0 & 1 & 1 \\ 1 & 0 & 0 & 1 \end{bmatrix}$

MATRIX OPERATION — 53a

MATRIX OPERATION — 53b

MATRIX OPERATION — 53n

$\begin{bmatrix} 0 & 0 & 0 & 0 \\ 0 & 0 & 0 & 0 \\ 0 & 0 & 0 & 0 \\ 0 & 0 & 0 & 0 \end{bmatrix}$

$\begin{bmatrix} 1 & 0 & 0 & 0 \\ 0 & 1 & 0 & 0 \\ 0 & 0 & 1 & 0 \\ 0 & 0 & 0 & 1 \end{bmatrix}$

$\{XXXX, IZIZ, IIZZ, ZIIZ\}$

$\{ZIII, IIZII, IIZI, IIIZ\}$

CREATE BASIS TRANSFORMATION CIRCUIT

MATRIX OPERATION — 53a

MATRIX OPERATION — 53b

. . .

MATRIX OPERATION — 53n

54

QUANTUM GATE — 54a

QUANTUM GATE — 54b

. . .

QUANTUM GATE — 54n

COLUMN SWAPPING SO THAT RANK OF X MATRIX
MATCHES THE NUMBER OF ELEMENTS IN G

X MATRIX

$$\begin{bmatrix} 1 & 0 & 0 & 0 \\ 0 & 1 & 0 & 1 \\ 0 & 0 & 1 & 1 \\ 0 & 0 & 0 & 1 \end{bmatrix}$$

51

COLUMN
SWAPPING

Z MATRIX

$$\begin{bmatrix} 0 & 1 & 1 & 1 \\ 0 & 0 & 0 & 0 \\ 0 & 0 & 0 & 0 \\ 1 & 0 & 0 & 0 \end{bmatrix}$$

52

ADD H GATES

QUBIT
INDEX

55

1 ──────────────────

2 ──[H]── 55a

3 ──[H]── 55b

4 ──[H]── 55c

FIG. 15

MATRIX OPERATION SO THAT EACH ROW OF X
MATRIX HAS ONE ELEMENT WITH "1" (1/2)

SELECT "INDEX A" AND "INDEX B"

ADD ELEMENTS OF "INDEX A", AND mod 2

ADD ELEMENTS OF "INDEX B", AND mod 2

ADD CX GATE

FIG. 16

## MATRIX OPERATION SO THAT EACH ROW OF X MATRIX HAS ONE ELEMENT WITH "1" (2/2)

FIG. 17

TRANSFORM Z MATRIX INTO 0 MATRIX

FIG. 18

SWAP X MTARIX AND Z MATRIX

MATRIX OPERATION COMPLETED

SWAPPING OF ALL COLUMNS

51

X MATRIX

$$\begin{bmatrix} 0 \\ 0 \\ 0 \\ 0 \end{bmatrix} \begin{bmatrix} 0 \\ 0 \\ 0 \\ 0 \end{bmatrix} \begin{bmatrix} 0 \\ 0 \\ 0 \\ 0 \end{bmatrix} \begin{bmatrix} 0 \\ 0 \\ 0 \\ 0 \end{bmatrix}$$

52

Z MATRIX

$$\begin{bmatrix} 1 \\ 0 \\ 0 \\ 0 \end{bmatrix} \begin{bmatrix} 0 \\ 1 \\ 0 \\ 0 \end{bmatrix} \begin{bmatrix} 0 \\ 0 \\ 1 \\ 0 \end{bmatrix} \begin{bmatrix} 0 \\ 0 \\ 0 \\ 1 \end{bmatrix}$$

ADD H GATES

QUBIT INDEX

1 ── ● ─ H ── 55g    55

2 ─ H ─ ● ─── H ── 55h

3 ─ H ─── ● ── H ── 55i

4 ─ H ─ ⊕ ─ ⊕ ─ ● ─ H ── 55j

FIG. 19

FIG. 20

FIG. 21

QUANTUM CIRCUIT
CREATION
START

ACQUIRE QUANTUM CIRCUIT
FOR QUANTUM COMPUTATION
CORRESPONDING TO
PROBLEM — S201

GENERATOR
GENERATION — S202

BASIS
TRANSFORMATION
OPERATION
DETERMINATION — S203

ADD BASIS
TRANSFORMATION CIRCUIT
TO QUANTUM CIRCUIT — S204

END

FIG. 22

FIG. 23

GENERATOR
GENERATION
START

S211
$\mathcal{P}=\{P_1,P_2,P_3,...\}$

S212
GENERATE $\mathcal{Q}=\{Q_1,Q_2,\cdots\}$

S213
IS THE
NUMBER OF ELEMENTS
IN $\mathcal{Q}$ $2^n-1$?

NO

S214
ELEMENT ADDITION FOR $\mathcal{Q}$

YES

S215
CALCULATE INDEX VALUE $v_i$
FOR EACH ELEMENT $Q_i$ OF $\mathcal{Q}$

S216
INITIALIZE GENERATOR G
($G=\varnothing$)

S217
k = 1

S218
ADD $Q_i$ WITH SMALLEST $v_i$
AS ELEMENT ($G_k$) TO G

S219
REMOVE $G_k$ AND
OBSERVABLES EACH
REPRESENTED BY PRODUCT
OF $G_k$ AND $G_1,\cdots,G_{k-1}$, FROM $\mathcal{Q}$

S220
$\mathcal{Q}=\varnothing$ ?

NO

S221
k = k+1

YES

END

FIG. 24

SEARCH FOR PAULI STRINGS THAT EACH CONTAIN TWO OR LESS CHARACTERS OTHER THAN I AND THAT COMMUTE WITH ALL ELEMENT OF $\mathcal{P}$, AND ADD THE PAULI STRINGS TO $\mathcal{P}'$

THE NUMBER OF ELEMENTS IN Q : 127

THE NUMBER OF ELEMENTS IN Q' : 255

FIG. 25

Flowchart:

ELEMENT ADDITION FOR $Q$ START

S231 — $\mathcal{P}=\{P_1,P_2,\cdots\}, Q$

S232 — $\mathcal{P}' \leftarrow \mathcal{P}$

S233 — INITIALIZE SET OF QUBIT INDICES ($q=\varnothing$)

S234 — QUBIT INDEX $q_1=1,\cdots,n$

S235 — DO PAULI CHARACTERS AT $q_1$ HAVE TWO KINDS, ONE OF WHICH IS I?

NO

YES

S236 — ADD $q_1$ TO $q$

S237 — ADD OBSERVABLE IN WHICH PAULI CHARACTER AT $q_1$ IS $p_{q,1}$ AND THE OTHER PAULI CHARACTERS ARE I, TO $\mathcal{P}'$

S238 — QUBIT INDEX $q_1=1,\cdots,n$

A

QUBIT INDEX $q_1 = 1, \cdots, n-1$ — 41

S242 — $q_1 \in q_i$ ? — YES

NO

$q_2 = q_1 + 1, \cdots, n$ — S243

S244 — $q_2 \in q_i$ ? — YES

NO

$s_1 = X, Y, Z$ & $s_2 = X, Y, Z$ — S245

GENERATE OBSERVABLE IN WHICH PAULI CHARACTER AT $q_1$ IS $s_1$, PAULI CHARACTER AT $q_2$ IS $s_2$, AND PAULI CHARACTERS OTHER THAN THOSE AT $q_1$ AND $q_2$ ARE I — S246

S247 — IS GENERATED OBSERVABLE COMMUTATIVE WITH ALL ELEMENTS IN $\mathcal{P}$? — NO

YES

ADD GENERATED OBSERVABLE TO $\mathcal{P}'$ — S248

$s_1 = X, Y, Z$ & $s_2 = X, Y, Z$ — S249

$q_2 = q_1 + 1, \cdots, n$ — S250

$q_1 = 1, \cdots, n-1$ — S251

GENERATE OBSERVABLE GROUP $\mathcal{Q}' = \{Q_1', Q_2', \cdots\}$ INCLUDING ALL ELEMENTS OF $\mathcal{P}'$ AND OBSERVABLES EACH REPRESENTED BY PRODUCT OF ELEMENTS — S252

$\mathcal{Q} \leftarrow \mathcal{Q}'$ — S253

END

FIG. 26

```
          ┌──────────────────────────┐
          │   BASIS TRANSFORMATION    │
          │ OPERATION DETERMINATION   │
          │          START           │
          └──────────────────────────┘
                       │
                       ▼
          ┌──────────────────────────┐   S301
          │     G={G_1,G_2,···}       │
          └──────────────────────────┘
                       │
                       ▼
          ┌──────────────────────────┐   S302
          │   CREATE TWO BINARY       │
          │ MATRICES (X MATRIX AND Z  │
          │   MATRIX) BASED ON G      │
          └──────────────────────────┘
                       │
                       ▼
          ┌──────────────────────────┐   S303
          │      H OPERATION          │
          │     DETERMINATION         │
          └──────────────────────────┘
                       │
                       ▼
          ┌──────────────────────────┐   S304
          │      CX OPERATION         │
          │     DETERMINATION         │
          └──────────────────────────┘
                       │
                       ▼
          ┌──────────────────────────┐   S305
          │      S OPERATION          │
          │     DETERMINATION         │
          └──────────────────────────┘
                       │
                       ▼
          ┌──────────────────────────┐   S306
          │      CZ OPERATION         │
          │     DETERMINATION         │
          └──────────────────────────┘
                       │
                       ▼
          ┌──────────────────────────┐   S307
          │   SWAP X MATRIX AND Z     │
          │         MATRIX            │
          │     (H OPERATION)         │
          └──────────────────────────┘
                       │
                       ▼
                 ┌───────────┐
                 │    END    │
                 └───────────┘
```

FIG. 27

H OPERATION
DETERMINATION
START

↓

QUBIT INDEX $q_1 = 1, \cdots, n$  —— S311

↓

IS RANK
OF SUBMATRIX MADE
OF LEFTMOST $q_1$ COLUMNS OF X —— S312
MATRIX EQUAL TO SMALLER OF
$q_1$ AND THE NUMBER OF
ELEMENTS IN *G?*

YES →

NO ↓

SWAP $q_1$-th COLUMN OF X —— S313
MATRIX AND $q_1$-th COLUMN
OF Z MATRIX

↓

$q_1 = 1, \cdots, n$  —— S314

↓

END

FIG. 28

CX OPERATION
DETERMINATION
START

**S321**
while: AT LEAST ONE ROW IN X MATRIX HAS TWO OR MORE ELEMENTS WITH VALUE "1"

**S322**
$l=1$

**S323**
SELECT COLUMN THAT HAS $l$-th LARGEST NUMBER OF ELEMENTS WITH VALUE "1" FROM X MATRIX ($q_2$-th COLUMN)

**S324**
IS THERE ANY OTHER COLUMN IN WHICH ELEMENTS ARE "0" IN ROWS WHERE ELEMENT IN $q_2$-th COLUMN IS "0"?

NO

**S325**
$l =$ THE NUMBER OF COLUMNS IN X MATRIX?

NO

**S327**
$l \leftarrow l+1$

YES

YES

**S326**
H TRANSFORMATION AND CX TRANSFORMATION

**S328**
SELECT COLUMN THAT HAS LARGEST NUMBER OF ELEMENTS WITH VALUE "1" AMONG DETECTED COLUMNS ($q_1$-th COLUMN)

**S329**
ADD ELEMENTS OF $q_1$-th COLUMN TO ELEMENTS OF $q_2$-th COLUMN, AND UPDATE EACH ELEMENT OF $q_2$-th COLUMN TO REMAINDER OBTAINED BY DIVINDING SUM BY 2

**S330**
while

END

FIG. 29

FIG. 30

FIG. 31

```
         ╭──────────────────────╮
         │     S OPERATION      │
         │   DETERMINATION      │
         │        START         │
         ╰──────────────────────╯
                    │
                    ▼
    ┌───────────────────────────────────┐     S361
    │   QUBIT INDEX $q_1=1,\cdots,n$     │
    └───────────────────────────────────┘
                    │
                    ▼
              DO ELEMENTS IN                    S362
      $q_1$-th COLUMN IN ROWS OF Z MATRIX
      CORRESPONDING TO ROWS OF X MATRIX              NO
       WHERE ELEMENT IN $q_1$-th COLUMN HAS
          VALUE "1" HAVE VALUE "1"?
                    │
                   YES
                    │
                    ▼
    ┌───────────────────────────────────┐     S363
    │  ADD ELEMENTS IN $q_1$-th COLUMN OF X │
    │ MATRIX TO ELEMENTS IN $q_1$-th COLUMN OF Z │
    │ MATRIX, AND SET REMAINDERS OBTAINED BY │
    │ DIVIDING SUM BY 2, AS ELEMENTS IN $q_1$-th │
    │        COLUMN OF Z MATRIX          │
    └───────────────────────────────────┘
                    │
                    ▼
    ┌───────────────────────────────────┐     S364
    │   QUBIT INDEX $q_1=1,\cdots,n$     │
    └───────────────────────────────────┘
                    │
                    ▼
              ╭──────────╮
              │   END    │
              ╰──────────╯
```

FIG. 32

```
                    ┌─────────────────────┐
                    │    CZ OPERATION     │
                    │   DETERMINATION     │
                    │       START         │
                    └─────────────────────┘
                              │
                              ▼
        ┌──────────────────────────────────────────┐  S371
        │      QUBIT INDEX q₁=1,···,n-1             │
        └──────────────────────────────────────────┘
                              │
                              ▼
        ┌──────────────────────────────────────────┐  S372
        │      QUBIT INDEX q₂=q₁+1,···,n            │
        └──────────────────────────────────────────┘
                              │
                              ▼
                    ╱─────────────────╲             S373
                ╱  DO ELEMENTS IN       ╲
            ╱  q₂-th COLUMN IN ROWS OF Z MATRIX ╲      NO
          ╱  CORRESPONDING TO ROWS OF X MATRIX WHERE ╲────────┐
          ╲  ELEMENT IN q₁-th COLUMN HAS VALUE "1"  ╱         │
              ╲       HAVE VALUE "1"?         ╱               │
                ╲─────────────────╱                           │
                         │ YES                                │
                         ▼                                    │
                    ╱─────────────────╲      S374             │
                ╱  DO ELEMENTS IN       ╲                     │
            ╱  q₁-th COLUMN IN ROWS OF Z MATRIX ╲     NO       │
          ╱  CORRESPONDING TO ROWS OF X MATRIX WHERE ╲────────┼──→
          ╲  ELEMENT IN q₂-th COLUMN HAS VALUE "1"  ╱         │
              ╲       HAVE VALUE "1"?         ╱               │
                ╲─────────────────╱                           │
                         │ YES                                │
                         ▼                                    │
        ┌──────────────────────────────────────────┐  S375    │
        │  ADD ELEMENTS IN q₁-th COLUMN OF X        │          │
        │  MATRIX TO ELEMENTS IN q₂-th COLUMN OF    │          │
        │  Z MATRIX, AND SET REMAINDERS OBTAINED    │          │
        │  BY DIVIDING SUM BY 2, AS ELEMENTS IN     │          │
        │  q₂-th COLUMN OF NEW Z MATRIX             │          │
        └──────────────────────────────────────────┘          │
                         │                                    │
                         ▼                                    │
        ┌──────────────────────────────────────────┐  S376    │
        │  ADD ELEMENTS IN q₂-th COLUMN OF X        │          │
        │  MATRIX TO ELEMENTS IN q₁-th COLUMN OF    │          │
        │  Z MATRIX, AND SET REMAINDERS OBTAINED    │          │
        │  BY DIVIDING SUM BY 2, AS ELEMENTS IN     │          │
        │  q₁-th COLUMN OF NEW Z MATRIX             │          │
        └──────────────────────────────────────────┘          │
                         │◄───────────────────────────────────┘
                         ▼
        ┌──────────────────────────────────────────┐  S377
        │      QUBIT INDEX q₂=q₁+1,···,n            │
        └──────────────────────────────────────────┘
                         │
                         ▼
        ┌──────────────────────────────────────────┐  S378
        │      QUBIT INDEX q₁=1,···,n-1             │
        └──────────────────────────────────────────┘
                         │
                         ▼
                    ┌─────────┐
                    │   END   │
                    └─────────┘
```

**FIG. 33**

S371 QUBIT INDEX $q_1=1,\cdots,n-1$

S372 QUBIT INDEX $q_2=q_1+1,\cdots,n$

S373 DO ELEMENTS IN $q_2$-th COLUMN IN ROWS OF Z MATRIX CORRESPONDING TO ROWS OF X MATRIX WHERE ELEMENT IN $q_1$-th COLUMN HAS VALUE "1" HAVE VALUE "1"?

S374 DO ELEMENTS IN $q_1$-th COLUMN IN ROWS OF Z MATRIX CORRESPONDING TO ROWS OF X MATRIX WHERE ELEMENT IN $q_2$-th COLUMN HAS VALUE "1" HAVE VALUE "1"?

S375 ADD ELEMENTS IN $q_1$-th COLUMN OF X MATRIX TO ELEMENTS IN $q_2$-th COLUMN OF Z MATRIX, AND SET REMAINDERS OBTAINED BY DIVIDING SUM BY 2, AS ELEMENTS IN $q_2$-th COLUMN OF NEW Z MATRIX

S376 ADD ELEMENTS IN $q_2$-th COLUMN OF X MATRIX TO ELEMENTS IN $q_1$-th COLUMN OF Z MATRIX, AND SET REMAINDERS OBTAINED BY DIVIDING SUM BY 2, AS ELEMENTS IN $q_1$-th COLUMN OF NEW Z MATRIX

S377 QUBIT INDEX $q_2=q_1+1,\cdots,n$

S378 QUBIT INDEX $q_1=1,\cdots,n-1$

FIG. 34

FIG. 35

FIG. 36

FIG. 37

EP 4 708 156 A1

FIG. 38

63

FIG. 39

FIG. 40

FIG. 41

EP 4 708 156 A1

## FIG. 42

THE NUMBER OF TWO QUBIT GATES

| PARTITION NUMBER | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| NO IMPROVEMENT MEASURE | 26 | 33 | 44 | 55 | 49 | 51 | 55 | 52 | 42 | 49 | 57 | 39 | 33 | 48 | 29 | 34 | 55 | 49 |
| CX | 19 | 24 | 22 | 26 | 21 | 20 | 26 | 20 | 26 | 19 | 26 | 26 | 11 | 9 | 11 | 6 | 27 | 11 |
| CZ | 7 | 9 | 22 | 29 | 28 | 31 | 29 | 32 | 16 | 30 | 31 | 13 | 22 | 39 | 18 | 28 | 58 | 36 |
| FIRST IMPROVEMENT MEASURE | 8 | 17 | 24 | 17 | 44 | 46 | 41 | 51 | 25 | 47 | 45 | 28 | 29 | 35 | 31 | 31 | 25 | 31 |
| CX | 5 | 14 | 15 | 10 | 17 | 18 | 13 | 14 | 13 | 18 | 26 | 15 | 9 | 8 | 8 | 9 | 9 | 7 |
| CZ | 3 | 3 | 9 | 7 | 27 | 28 | 28 | 37 | 12 | 29 | 19 | 13 | 20 | 27 | 23 | 22 | 16 | 24 |
| FIRST AND SECOND IMPROVEMENT MEASURES | 4 | 4 | 6 | 9 | 23 | 32 | 24 | 26 | 18 | 23 | 27 | 19 | 19 | 22 | 12 | 16 | 17 | 30 |
| CX | 1 | 0 | 0 | 2 | 13 | 10 | 12 | 13 | 10 | 10 | 11 | 10 | 10 | 8 | 4 | 7 | 5 | 6 |
| CZ | 3 | 4 | 6 | 7 | 10 | 22 | 12 | 13 | 8 | 13 | 16 | 9 | 9 | 14 | 8 | 9 | 12 | 24 |
| THE NUMBER OF ELEMENTS IN $Q$ | 4095 | 4095 | 4095 | 4095 | 2047 | 2047 | 2047 | 2047 | 2047 | 2047 | 2047 | 2047 | 255 | 255 | 127 | 127 | 127 | 127 |
| FIRST, SECOND, AND THIRD IMPROVEMENT MEASURES | 4 | 4 | 6 | 9 | 16 | 11 | 14 | 10 | 12 | 13 | 16 | 14 | 9 | 16 | 3 | 5 | 7 | 9 |
| CX | 1 | 0 | 0 | 2 | 8 | 5 | 3 | 2 | 5 | 6 | 7 | 7 | 6 | 7 | 1 | 3 | 3 | 5 |
| CZ | 3 | 4 | 6 | 7 | 8 | 6 | 11 | 8 | 7 | 7 | 9 | 7 | 3 | 9 | 2 | 9 | 4 | 4 |
| THE NUMBER OF ELEMENTS IN $Q$ | 4095 | 4095 | 4095 | 4095 | 4095 | 4095 | 4095 | 4095 | 4095 | 4095 | 4095 | 4095 | 4095 | 4095 | 4095 | 4095 | 4095 | 4095 |

82

83

84

85

PARTITION NUMBER "2"

| NO IMPROVEMENT MEASURE 86 | FIRST IMPROVEMENT MEASURE 87 | FIRST AND SECOND IMPROVEMENT MEASURES 88 | FIRST, SECOND, AND THIRD IMPROVEMENT MEASURES 89 |
|---|---|---|---|
| IIXZXIIZIIII | IZIIIIIIIIII | IZIIIIIIIIII | IZIIIIIIIIII |
| IIXXYYIIIIII | IIIIIIIIIIIZ | IIIIIIIIIIIZ | IIIIIIIIIIIZ |
| IIXZXIIIIZII | IZIIIIIZIIII | IIIIIIIIIZIII | IIIIIIIIIZIII |
| YZZZYIZIIIII | IZIIIIZIIIII | IIIIIIIIZIIII | IIIIIIIIZIIII |
| XZZZZZZZZZXI | IIIIIIIIIZIZ | IIIIIIZIIIII | IIIIIIZIIIII |
| IIYZZZZZZIYI | IIIIIIIIZIIZ | IIIIIIIIIZII | IIIIIIIIIZII |
| IIXZXIZIIIII | IIXZXIIIIIII | IIIZIZIIIIII | IIIZIZIIIIII |
| IZIIIIIIZIII | IIIXZXIIIIII | IIXZXIIIIIII | IIXZXIIIIIII |
| IZIIIIIZIIII | IIIYZYIIIIII | IIIXZXIIIIII | IIIXZXIIIIII |
| IIIIIIIIIZIZ | YIZZYIIIIIII | XIXIIIIIIIZI | XIXIIIIIIIZI |
| IIXYYXIIIIII | ZIIIXZZZZZXI | ZIXIIIIIIIXI | ZIXIIIIIIIXI |
| IIIYZYIIIIII | IIYXIXZZZZYI | ZIZIZIIIIIZI | ZIZIZIIIIIZI |
| G | G | G | G |
| 4.5 | 3.5 | 2.0 | 2.0 |

AVERAGE NUMBER OF CHARACTERS OTHER THAN I

## FIG. 43

PARTITION NUMBER "10"

| NO IMPROVEMENT MEASURE | FIRST IMPROVEMENT MEASURE | FIRST AND SECOND IMPROVEMENT MEASURES | FIRST, SECOND, AND THIRD IMPROVEMENT MEASURES |
|---|---|---|---|
| 90 | 91 | 92 | 93 |

| | | | |
|---|---|---|---|
| IYZZZZZYXXI | ZIIZIIIIIIII | ZIIZIIIIIIII | ZIIZIIIIIIII |
| IZIIXZZZZZXI | IIZIIIIIIIIZ | IIZIIIIIIIIZ | IIZIIIIIIIIZ |
| IYZZZZYXZZXI | IXZZIXIIIIII | IIIIIIZZIIII | IIIIIIZZIIII |
| IYYIIIIIIIYY | IIIIYXIIXYII | IIIIIIIIZZII | IIIIIIIIZZII |
| YZYYZZZZZZZY | IIIIYXXYIIII | IXZZIXIIIIII | IXZZIXIIIIII |
| IIIIYXIIXYII | YYIYYIIIIIII | IZIIXZIIIIXI | IZIIXZIIIIXI |
| IIIIIXZZXYYI | IIIIIXZZXYYI | XIXXIIIIIIIX | XIXXIIIIIIIX |
| IIZIIIIIIIIZ | IZIIXZZZZZXI | IIIIYIIIIIYI | IIIIIIIIYXII |
| YZZXIXZZZZYI | IXZZYIIIYXII | IIIIYXIIXYII | IIIIIIYXIIII |
| ZIIZIIIIIIII | XZZYIIYXIIII | IIIIYXXYIIII | IIIIYXIIIIII |
| IIXZZZXYZZZY | IYYIIIIIIIYY | XXIXXZIIIIZI | IIIIIXIIIIYI |
| | | | XZIYIIIIIIIZ |

| AVERAGE NUMBER OF CHARACTERS OTHER THAN I | G 7.1 | G 4.5 | G 3.3 | G 2.7 |
|---|---|---|---|---|

FIG. 44

THE NUMBER OF TWO-QUBIT GATES

| WEIGHTS FOR X, Y, Z | [1.0,1.0,1.0] | [1.0,1.3,1.0] | [1.0,1.5,1.0] | [1.0,1.7,1.0] | [1.0,2.0,1.0] | [1.0,2.3,1.0] | [1.0,3.0,1.0] |
|---|---|---|---|---|---|---|---|
| FIRST, SECOND, AND THIRD IMPROVEMENT MEASURES | 27 | 15 | 12 | 15 | 16 | 16 | 18 |
| CX | 12 | 7 | 6 | 7 | 7 | 7 | 9 |
| CZ | 15 | 8 | 6 | 8 | 9 | 9 | 9 |

| | [1.2,1.5,1.0] | [1.3,1.5,1.0] | [1.0,1.5,1.2] | [1.01.5,1.3] | [1.0,2.0,1.2] | [1.0,2.0,1.5] | [1.2,2.0,1.0] | [1.5,2.0,1.0] |
|---|---|---|---|---|---|---|---|---|
| | 14 | 17 | 14 | 14 | 14 | 15 | 15 | 15 |
| | 8 | 10 | 7 | 8 | 7 | 8 | 8 | 7 |
| | 6 | 7 | 7 | 6 | 7 | 7 | 7 | 8 |

FIG. 45

# EUROPEAN SEARCH REPORT

**Application Number**

EP 25 19 9563

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/237361 A1 (COWTAN ALEXANDER [GB] ET AL) 27 July 2023 (2023-07-27) <br> * paragraph [0195] - paragraph [0199] * <br> * paragraph [0121] * <br> * paragraph [0003] - paragraph [0007] * <br> * paragraph [0158] * <br> ----- | 1-8 | INV. <br> G06N10/20 |
| A | HARSHDEEP SINGH ET AL: "SHARC-VQE: Simplified Hamiltonian Approach with Refinement and Correction enabled Variational Quantum Eigensolver for Molecular Simulation", <br> ARXIV.ORG, CORNELL UNIVERSITY LIBRARY, 201 OLIN LIBRARY CORNELL UNIVERSITY ITHACA, NY 14853, <br> 17 July 2024 (2024-07-17), XP091824224, <br> * Abstract; Section 1; Section 2; Figure 1, Table I, Table II * <br> ----- | 1-8 | |
| A | TOMOCHIKA KURITA ET AL: "Pauli String Partitioning Algorithm with the Ising Model for Simultaneous Measurement", <br> ARXIV.ORG, CORNELL UNIVERSITY LIBRARY, 201 OLIN LIBRARY CORNELL UNIVERSITY ITHACA, NY 14853, <br> 9 May 2022 (2022-05-09), XP091309883, <br> * Abstract; Section 1, Section 2, Section 3 * <br> ----- | 1-8 | **TECHNICAL FIELDS SEARCHED (IPC)** <br><br> G06N |

The present search report has been drawn up for all claims

| Place of search | Date of completion of the search | Examiner |
|---|---|---|
| The Hague | 3 December 2025 | Popa, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 9563

This annex lists the patent family members relating to the patent documents cited in the above-mentioned European search report.
The members are as contained in the European Patent Office EDP file on
The European Patent Office is in no way liable for these particulars which are merely given for the purpose of information.

03-12-2025

| Patent document cited in search report | Publication date | Patent family member(s) | Publication date |
|---|---|---|---|
| US 2023237361 A1 | 27-07-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022269712 A
- JP 2023521223 A
- JP 2023547348 A